(19)

Europäisches
Patentamt
European
Patent Office
Office européen
des brevets

(11) **EP 3 536 051 B1**

(12) **EUROPEAN PATENT SPECIFICATION**

(45) Date of publication and mention
of the grant of the patent:
**07.10.2020 Bulletin 2020/41**

(51) Int Cl.:
*H04W 52/14* (2009.01)     *H04W 52/36* (2009.01)

(21) Application number: **17761611.7**

(22) Date of filing: **23.08.2017**

(86) International application number:
**PCT/SE2017/050848**

(87) International publication number:
**WO 2018/084763 (11.05.2018 Gazette 2018/19)**

(54) **ADAPTING RESOURCE ELEMENT POWER CONTROL DYNAMIC RANGE IN DOWNLINK FOR SHORTENED TRANSMISSION TIME INTERVAL**

ANPASSUNG DES DYNAMISCHEN BEREICHS DER RESSOURCENELEMENTLEISTUNGSSTEUERUNG IN DOWNLINK FÜR VERKÜRZTES ÜBERTRAGUNGSZEITINTERVALL

ADAPTATION DE PLAGE DYNAMIQUE DE COMMANDE DE PUISSANCE D'ÉLÉMENT DE RESSOURCE EN LIAISON DESCENDANTE POUR UN INTERVALLE DE TEMPS DE TRANSMISSION RACCOURCI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2016 US 201662418046 P**

(43) Date of publication of application:
**11.09.2019 Bulletin 2019/37**

(73) Proprietor: **Telefonaktiebolaget LM Ericsson (Publ)**
**164 83 Stockholm (SE)**

(72) Inventors:
- **CALLENDER, Christopher**
  **Kinross KY13 OLW (GB)**
- **EVERAERE, Dominique**
  **184 91 Åkersberga (SE)**
- **RAHMAN, Imadur**
  **191 46 Sollentuna (SE)**
- **KAZMI, Muhammad**
  **174 64 Sundbyberg (SE)**

(74) Representative: **Ericsson**
**Patent Development**
**Torshamnsgatan 21-23**
**164 80 Stockholm (SE)**

(56) References cited:
**US-A1- 2016 143 008**

- **RAN1: "LS on Shortened TTI and processing time for LTE", 3GPP DRAFT; R1-1611055, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 18 October 2016 (2016-10-18), XP051160500, Retrieved from the Internet: URL:http://www.3gpp.org/ftp/tsg_ran/WG1_RL 1/TSGR1_86b/Docs/ [retrieved on 2016-10-18] cited in the application**
- **QUALCOMM EUROPE: "TP on complexity aspect of shorter TTI", 3GPP DRAFT; R1-040371, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Malaga, Spain; 20040223, 23 February 2004 (2004-02-23), XP050098684, [retrieved on 2004-02-23]**
- **"3 Generation Partnership Project; Technical Specification Group Radio Access Network; Evolved Universal Terrestrial Radio Access (E-UTRA); Physical layer procedures (Release 14)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V14.0.0, 29 September 2016 (2016-09-29), pages 8-45, XP051172655, [retrieved on 2016-09-29]**

EP 3 536 051 B1

**(Cont. next page)**

- "3 Generation Partnership Project; Technical Specification Group Radio Access Network; Evolved Universal Terrestrial Radio Access (E-UTRA); Base Station (BS) radio transmission and reception (Release 14)", 3GPP STANDARD; 3GPP TS 36.104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V14.1.0, 2 October 2016 (2016-10-02), pages 1-211, XP051172876, [retrieved on 2016-10-02]

**Description**

TECHNICAL FIELD

The disclosure is directed to wireless communications, and in particular, to adaptive resource power control dynamic range in the downlink based on at least one shortened transmission time interval (TTI).

BACKGROUND

Long Term Evolution Release 8 (LTE Rel-8) - transmission time interval (TTI)

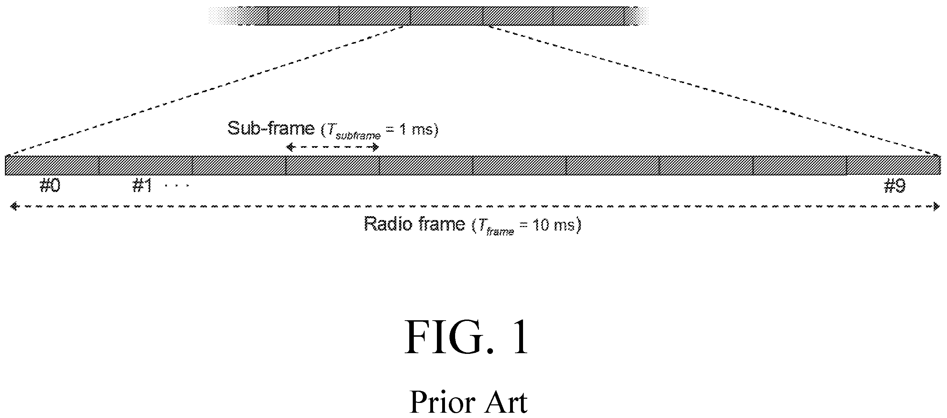

LTE uses OFDM in the downlink and DFT-spread OFDM in the uplink. In the time domain, LTE downlink transmissions are organized into radio frames of 10 ms, each radio frame consisting of ten equally-sized subframes of length $T_{subframe}$ = 1 ms, as illustrated in FIG. 1.

Furthermore, the resource allocation in LTE is typically described in terms of resource blocks (RB), where a resource block corresponds to one slot (0.5 ms) in the time domain and 12 contiguous subcarriers in the frequency domain. A pair of two adjacent resource blocks in time direction (1.0 ms) is a resource block pair. This is also denoted as TTI (Transmission Time Index). Downlink transmissions are dynamically scheduled, i.e., in each subframe the base station transmits control information about to which terminals data is transmitted and upon which resource blocks the data is transmitted, in the current downlink subframe. This control signaling is typically transmitted in the first 1, 2, 3 or 4 orthogonal frequency division multiplexing (OFDM) symbols in each subframe and the number n=1,2,3 or 4 is known as the Control Format Indicator (CFI) indicated by the physical CFI channel (PCFICH) transmitted in the first symbol of the control region. The control region also contains physical downlink control channels (PDCCH) and possibly also physical HARQ indication channels (PHICH) carrying acknowledgments (ACK)/negative acknowledgements (NACK) for the uplink transmission.

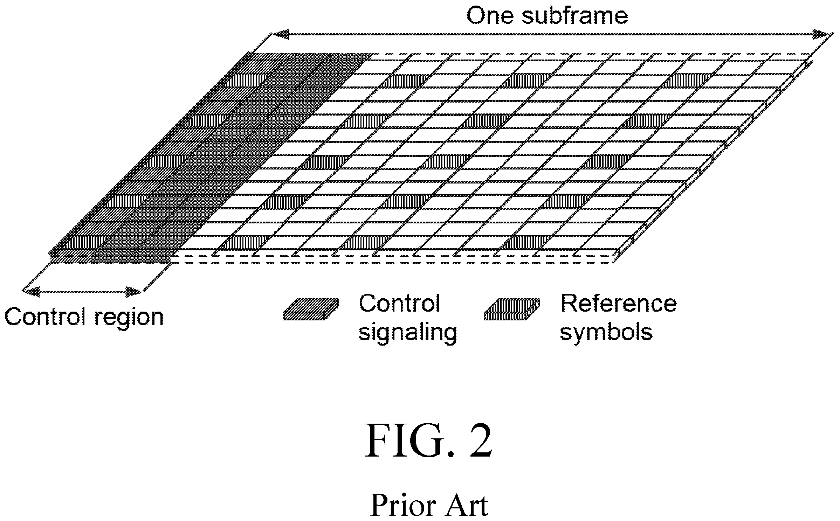

The downlink subframe also contains common reference symbols (CRS), which are known to the receiver and used for coherent demodulation of, e.g., the control information. A downlink system with CFI=3 OFDM symbols as control is illustrated in FIG. 2. In a LTE Rel-8 TTI, one such portion of the downlink (DL) transmission is termed as one TTI.

Latency reduction with short subframes

Packet data latency is one of the performance metrics that vendors, operators and also end-users (via speed test applications) regularly measure. Latency measurements are done in all phases of a radio access network system lifetime, when verifying a new software release or system component, when deploying a system and when the system is in commercial operation. Shorter latency than previous generations of Third Generation Partnership Project (3GPP) Radio Access Technologies (RATs) was one performance metric that guided the design of Long Term Evolution (LTE). LTE is also now recognized by the end-users to be a system that provides faster access to internet and lower data latencies than previous generations of mobile radio technologies.

Packet data latency is important not only for the perceived responsiveness of the system; it is also a parameter that indirectly influences the throughput of the system. Hypertext Transfer Protocol (HTTP)/Transmission Control Protocol (TCP) is the dominating application and transport layer protocol suite used on the internet. According to HTTP Archive, the typical size of HTTP based transactions over the internet are in the range of a few 10's of Kbytes up to 1 Mbyte. In this size range, the TCP slow start period is a significant part of the total transport period of the packet stream. During TCP slow start the performance is latency limited. Hence, improved latency can rather easily be showed to improve the average throughput, for this type of TCP based data transactions.

Radio resource efficiency could be positively impacted by latency reductions. Lower packet data latency could increase the number of transmissions possible within a certain delay bound; hence higher Block Error Rate (BLER) targets could be used for the data transmissions freeing up radio resources potentially improving the capacity of the system.

One area of concern when it comes to packet latency reductions is the reduction of transport time of data and control signaling, by addressing the length of a transmission time interval (TTI). In LTE Rel-8, a TTI corresponds to one subframe (SF) of length 1 millisecond. One such 1 ms TTI is constructed by using 14 OFDM or Single-Carrier Frequency Division Multiple Access (SC-FDMA) symbols in the case of normal cyclic prefix and 12 OFDM or SC-FDMA symbols in the case of extended cyclic prefix. In LTE release 13, a study item was started during 2015, with the goal of specifying transmissions with shorter TTIs that are much shorter than the LTE release 8 TTI. The shorter TTIs can be decided to have any duration in time and comprise resources on a number of OFDM or SC-FDMA symbols within a 1 ms SF. As one example, the duration of the short TTI may be 0.5 ms, i.e., seven OFDM or SC-FDMA symbols for the case with normal cyclic prefix. As another example, the duration of the short TTI may be 2 symbols.

As illustrated in FIG. 2, the TTI length consists of 14 OFDM symbols. In case of shortened TTI, (sTTI) the TTI length can be reduced to 2-OFDM symbols, 4-OFDM symbols or 7-OFDM symbols. These are denoted as: 2-OS sTTI, 4-OS sTTI, 7-OS sTTI, respectively. The shortened TTI can be used in different values in different direction, such as DL and uplink (UL). For example: a DL can use 2-OS sTTI, while UL can use 4-OS sTTI in the same cell. For different frame structures, such as FS1, FS2 and FS3, the sTTI that is used could be different too. The time domain structure in FIG. 1 relates to FS1. 2-OS, 4OS and 7 OS TTI are usable for FS1. For FS2 which is used for time division duplex (TDD), 7-OS sTTI is one of the shortened TTI mode. The shortened TTI is also interchangeably called as short TTI, small TTI, mini-slot, etc.

Some example TTI durations are described below.

7-symbol TTI

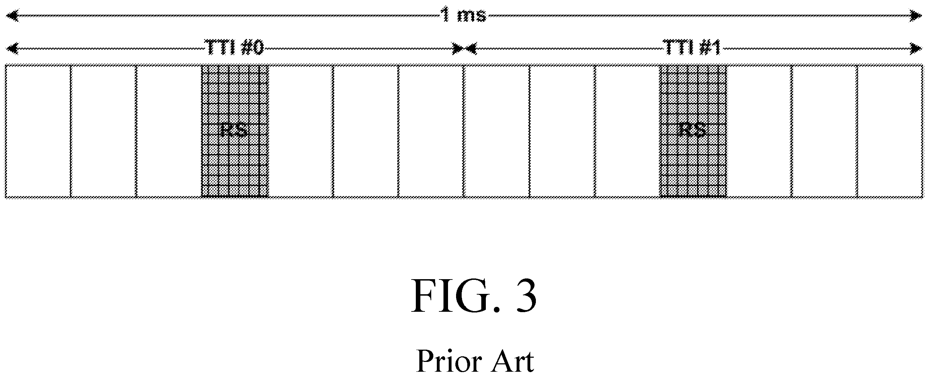

For 7-symbol TTI, the sTTI structure illustrated in FIG. 3 is supported for UL according to agreements in R1-1611055.

4-symbol TTI

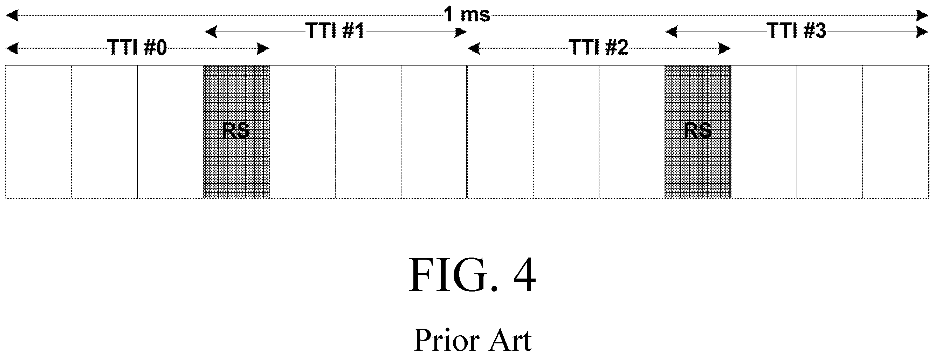

If 4-symbol UL sTTI is supported, the sTTI structure illustrated in FIG. 4 is adopted, according to agreements in R1-1611055.

DL power control dynamic range

The base station has a certain flexibility regarding DL power control: 3GPP Technical Specification (TS) 36.104 v14.1.0 specifies a power control dynamic range for a resource element. A base station (BS) could configure different output power depending on the considered resource element. There is also a dynamic range requirement for the total base station power. The dynamic range or power control dynamic range in any radio resource (e.g. resource element) is defined with respect to some reference radio resources (e.g. reference signal such as CRS). The dynamic range or power control dynamic range is defined separately for each signal or channel e.g. physical downlink control channel (PDCCH), physical downlink shared channel (PDSCH), etc.

Output power dynamics

The requirements of output power dynamics apply during the transmitter ON period. Transmit signal quality shall be maintained for the output power dynamics requirements of this Clause. Power control is used to limit the interference level.

RE Power control dynamic range

The RE power control dynamic range is the difference between the power of an RE and the average RE power for a BS at maximum output power for a specified reference condition.

Minimum requirements

RE power control dynamic range:

Table 1- E-UTRA BS/Network Node RE power control dynamic range

| Modulation scheme used on the RE | RE power control dynamic range (dB) | |
|---|---|---|
| | (down) | (up) |
| QPSK (PDCCH) | -6 | +4 |
| QPSK (PDSCH) | -6 | +3 |
| 16QAM (PDSCH) | -3 | +3 |
| 64QAM (PDSCH) | 0 | 0 |
| 256QAM (PDSCH) | 0 | 0 |
| NOTE 1: The output power per carrier shall always be less or equal to the maximum output power of the base station. | | |

Total power dynamic range

The total power dynamic range is the difference between the maximum and the minimum transmit power of an OFDM symbol for a specified reference condition. The upper limit of the dynamic range is the OFDM symbol power for a BS at maximum output power. The lower limit of the dynamic range is the OFDM symbol power for a BS when one resource block is transmitted. The OFDM symbol shall carry PDSCH and not contain RS, PBCH or synchronization signals.

Minimum requirements

The downlink (DL) total power dynamic range for each E-UTRA carrier shall be larger than or equal to the level in Table 2.

Table 2- E-UTRA BS total power dynamic range

| E-UTRA channel bandwidth (MHz) | Total power dynamic range (dB) |
| --- | --- |
| 1.4 | 7.7 |
| 3 | 11.7 |
| 5 | 13.9 |
| 10 | 16.9 |
| 15 | 18.7 |
| 20 | 20 |

Existing systems suffer from several drawbacks. One of the major drawbacks when introducing shorten TTI feature would be the potential degradation on the coverage in DL (and UL), due to the reduce length on which BS (UE) would transmit.
A prior art solution for configuring TTI can be found in e.g. US 2016/143008 A1 and a prior art solution for downlink power configuration can be found in e.g. R1-040371, Qualcomm Europe: "TP on complexity aspect of shorter TTI".

SUMMARY

Improvements to compensate for reduced coverage can ease adoption of this reduced latency proposal.
Certain embodiments according to aspects of the present disclosure may provide solutions to these or other problems. For example, in one or more embodiments of the disclosure provide a base station or network node that is better able to adapt its output power budget. In one or more embodiments, the downlink coverage would be improved, compensating the introduction of the shorten TTI feature or configuration.
According to certain aspects of the present disclosure, a power control dynamic range scheme is controlled for at least one shorten TTI.
In a first aspect, a method in a network node is provided. The method comprises the steps of:

Step 10: Configuring a first wireless device with first TTI (TTI1) used for operating a first signal (S1) between the network node and the first wireless device,
Step 12: Comparing TTI1 for transmitting S1 to the first wireless device with a threshold (H1),
Step 14: Determining a power control dynamic range scheme based on the comparison between TTI1 and HI,
Step 14: Determining a power control dynamic range scheme based on the comparison between TTI1 and HI,
Step 16: Transmitting S1 to the first wireless device based on the determined power control dynamic range scheme:
Step 16a: Transmitting S1 using a first power control dynamic range (R1) if TTI1 > HI, otherwise transmitting S1 with a second power control dynamic range (R2).
Step 18 (in some but not necessarily all embodiments): Transmitting or forwarding the information about the determined power control dynamic range scheme to another node, e.g., the first wireless device, another wireless device, another network node, etc.

In a second aspect, a method in a network node is provided. The method comprising the steps of:

Step 20: Configuring a first wireless device with first TTI (TTI1) used for operating a first signal (S1) between the BS and first wireless device.

Step 22: Configuring a second wireless device with second TTI (TTI2) used for operating a second signal (S2) between the BS and second wireless device.

Step 24: Comparing the configured TTIs and determining based on one or more criteria the best or suitable power control dynamic range scheme for each wireless device.

Step 26: Using the determined power control dynamic range schemes for transmitting S1 and S2 to first wireless device and second wireless device respectively.

Step 28 (in some but not necessarily all embodiments): Transmitting or forwarding the information about the determined power control dynamic range schemes to another node, e.g., first wireless device, second wireless device, another wireless device, another network node etc.

In a third aspect, a method for a first wireless device is provided. The method comprising the steps of:

Step 30: Determining that first wireless device is configured with first TTI (TTI1) used for operating a first signal (S1) between a network node and first wireless device,

Step 32: Comparing TTI1 used by the network node for transmitting S1 to first wireless device with a threshold (H1),

Step 34: Determining a power control dynamic range scheme based on the comparison between TTI1 and HI,

Step 36: Adapting a receiver configuration of first wireless device for receiving S1 from the network node based on the determined power control dynamic range scheme.

According to one aspect of the disclosure, a network node is provided. The network node includes processing circuitry including a processor and a memory. The processing circuitry is configured to: configure a wireless device with a transmission time interval, TTI for use in operating a first physical channel between the network node and the wireless device, the physical channel including a first reference radio resource, compare the TTI with a threshold, and determine a first power control dynamic range scheme for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel, the second power control dynamic range being different from the first power control dynamic range. A power of the first reference radio resource in the first power control dynamic range is the same as a power of the first reference radio resource in the second power control dynamic range. The processing circuitry is configured to transmit, on the first physical channel, to the wireless device using the determined first power control dynamic range scheme.

According to one embodiment of this aspect, the processing circuitry is further configured to: determine the value of the TTI based on at least one taken from a group consisting of: whether the wireless device supports at least two different TTIs, a wireless device bit rate, a round trip time to deliver a data packet between the wireless device and the network node, and a location of the wireless device with respect to a network node. The TTI configured for the wireless device corresponds to the determined TTI. According to one embodiment of this aspect, the TTI is a shorten TTI that is less than 1ms. The shorten TTI including one taken from a group consisting of: 2- Orthogonal frequency-division multiplexing (OFDM) symbols, 4-OFDM symbols and 7-OFDM symbols.

According to one embodiment of this aspect, the processing circuitry is further configured to: configure the wireless device with the transmission time interval, TTI for use in operating a second physical channel between the network node and the wireless device. The second physical channel including a second reference radio resource and being different from the first physical channel. The processing circuitry is further configured to determine a second power control dynamic range scheme for the second physical channel based on the comparison between the TTI and the threshold. The second power control dynamic range is defined with respect to the second reference radio resource. The determination of the second power control dynamic range scheme includes: if the TTI is greater than the second threshold, selecting a third power control dynamic range for the first physical channel, the first threshold being different from the second threshold, and if the TTI is less than the second threshold, selecting a fourth power control dynamic range for the first physical channel, the third power control dynamic range is different from the fourth power control dynamic range. A power of the second reference radio resource in the third power control dynamic range being the same as a power of the second reference radio resource in the fourth power control dynamic range. The processing circuitry is further configured to transmit, on the second physical channel, to the wireless device using the determined second power control dynamic range scheme.

According to one embodiment of this aspect, the first physical channel is a PDCCH and the second physical channel is a PDSCH. According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), structure with information about PUCCH (sPUCCH), structure with information about PDSCH (sPDSCH), Structure with information about PDCCH (sPDCCH), structure with information about PUSCH (sPUSCH), MTC physical downlink control channel(MPDCCH), Narrowband Physical Downlink Control Channel (NPDCCH), Narrowband Physical Downlink Shared Channel (NPDSCH), Enhanced Physical Downlink Control Channel (E-PDCCH), Physical Uplink Shared Channel (PUSCH), Physical Uplink Control Channel (PUCCH), and Narrowband Physical Uplink Shared Channel (NPUSCH). According to one embodiment of this aspect, the first reference radio resource is at least part of a reference signal taken from a group of: primary synchronization signal (PSS), secondary synchronization signal (SSS), cell-specific reference signal (CRS), and positioning reference signal (PRS). According to one embodiment of this aspect, the network node is distributed among a plurality of network nodes.

According to another aspect of the disclosure, a method in a communication network is provided. A wireless device is configured with a transmission time interval, TTI for use in operating a first physical channel between a network node and the wireless device. The physical channel includes a first reference radio resource. The TTI is compared with a threshold. A first power control dynamic range scheme is determined for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel, the second power control dynamic range being different from the first power control dynamic range. A power of the first reference radio resource in the first power control dynamic range is the same as a power of the first reference radio resource in the second power control dynamic range. Transmission is performed, on the first physical channel, to the wireless device using the determined first power control dynamic range scheme.

According to one embodiment of this aspect, a value of the TTI is determined based on at least one taken from a group consisting of: whether the wireless device supports at least two different TTIs; a wireless device bit rate; a round trip time to deliver a data packet between the wireless device and the network node; and a location of the wireless device with respect to a network node. The TTI is configured for the wireless device corresponding to the determined TTI. According to one embodiment of this aspect, the TTI is a shortened TTI that is less than 1ms, the shorten TTI including one taken from a group consisting of: 2-Orthogonal frequency-division multiplexing (OFDM) symbols, 4-OFDM symbols and 7-OFDM symbols.

According to one embodiment of this aspect, the wireless device is configured with the transmission time interval, TTI for use in operating a second physical channel between the network node and the wireless device. The second physical channel includes a second reference radio resource and being different from the first physical channel. A second power control dynamic range scheme is determined for the second physical channel based on the comparison between the TTI and the threshold. The second power control dynamic range is defined with respect to the second reference radio resource. The determination of the second power control dynamic range scheme includes: if the TTI is greater than the second threshold, selecting a third power control dynamic range for the first physical channel, the first threshold being different from the second threshold, and if the TTI is less than the second threshold, selecting a fourth power control dynamic range for the first physical channel, the third power control dynamic range being different from the fourth power control dynamic range. A power of the second reference radio resource in the third power control dynamic range is the same as a power of the second reference radio resource in the fourth power control dynamic range. A transmission is performed, on the second physical channel, to the wireless device using the determined second power control dynamic range scheme.

According to one embodiment of this aspect, the first physical channel is a PDCCH and the second physical channel is a PDSCH. According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), shortened PDSCH (sPDSCH), shortened PDCCH (sPDCCH), MTC physical downlink control channel (MPDCCH), Narrowband Physical Downlink Control Channel (NPDCCH), Narrowband Physical Downlink Shared Channel (NPDSCH), Enhanced Physical Downlink Control Channel (E-PDCCH). According to one embodiment of this aspect, the first reference radio resource is at least part of a reference signal. According to one embodiment of this aspect, the reference signal is taken from a group consisting of: primary synchronization signal (PSS), secondary synchronization signal (SSS), cell-specific reference signal (CRS), and positioning reference signal (PRS).

According to another aspect of this disclosure, a network node is provided. The network node includes a processing circuitry configured to: configure a first wireless device with a first transmission time interval, TTI, for operating a first physical channel between the network node and the first wireless device, the first physical channel including a first reference radio resource, and configure a second wireless device with a second TTI for operating a second physical channel between the network node and the second wireless device. The second physical channel includes a second reference radio resource. The processing circuitry is configured to compare the first TTI and second TTI, and determine a first power control dynamic range scheme for the first physical channel based on the comparison between the first TTI and the second TTI. The first power control dynamic range scheme is defined with respect to the first reference radio resource. A second power dynamic range scheme is determined for the second physical channel based on the comparison between the first TTI and the second TTI. The second power control dynamic range scheme is defined with respect to the second reference radio resource. The determined first power control dynamic range scheme is applied for transmitting, on the first physical channel, to the first wireless device. The determined second power control dynamic range scheme is applied for transmitting, on the second physical channel, to the second wireless device.

According to one embodiment of this aspect, the processing circuitry is further configured to determine a value of the first TTI based on at least one taken from a group consisting of: whether the first wireless device supports at least two different TTIs, a first wireless device bit rate, a round trip time to deliver a data packet between first wireless device and the network node, and a location of the first wireless device with respect to a serving cell.

According to one embodiment of this aspect, the first power control dynamic range scheme for each TTI is determined based on at least one taken from a group consisting of: at least one predefined requirement, an indication received from another network node, historical data, performance of reception of respective signals at the first wireless device and at the second wireless device, and network node capability limitations with respect to the first power control dynamic range scheme. According to one embodiment of this aspect, the first power control dynamic range scheme is determined based on a signal type. According to one embodiment of this aspect, the signal type is any one taken from the group consisting of a physical signal and a physical channel. According to one embodiment of this aspect, the physical signal is a reference signal taken from the group of: a primary synchronization signal (PSS), secondary synchronization signal (SSS), cell-specific reference signal (CRS), and positioning reference signal (PRS). According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), structure with information about PUCCH (sPUCCH), structure with information about shortened PDSCH (sPDSCH), Structure with information about shortened PDCCH (sPDCCH), structure with information about PUSCH (sPUSCH), MTC physical downlink control channel (MPDCCH), Narrowband Physical Downlink Control Channel (NPDCCH), Narrowband Physical Downlink Shared Channel (NPDSCH), Enhanced Physical Downlink Control Channel (E-PDCCH). According to one embodiment of this aspect, the network node is distributed among a plurality of network nodes.

According to another aspect of the disclosure, a method in a communication network is provided. A first wireless device is configured with a first transmission time interval, TTI, for operating a first physical channel between a network node and the first wireless device. The first physical channel includes a first reference radio resource. A second wireless device is configured with a second TTI for operating a second physical channel between the network node and the second wireless device. The second physical channel includes a second reference radio resource. The first TTI and second TTI are compared. A first power control dynamic range scheme is determined for the first physical channel based on the comparison between the first TTI and the second TTI. The first power control dynamic range scheme is defined with respect to the first reference radio resource. A second power dynamic range scheme is determined for the second physical channel based on the comparison between the first TTI and the second TTI. The second power control dynamic range scheme is defined with respect to the second reference radio resource. The determined first power control dynamic range scheme is applied for transmitting, on the first physical channel, to the first wireless device. The determined second power control dynamic range scheme is applied for transmitting, on the second physical channel, to the second wireless device.

According to one embodiment of this aspect, a value of the first TTI is determined based on at least one taken from the group consisting of: whether the first wireless device supports at least two different TTIs; a first wireless device bit rate; a round trip time to deliver a data packet between first wireless device and the network node; and a location of the first wireless device with respect to a serving cell. According to one embodiment of this aspect, the determination of the first power control dynamic range scheme is further based on at least one taken from a group consisting of: at least one predefined requirement; an indication received from another network node; historical data; performance of reception of respective signals at the first wireless device and at the second wireless device; and network node capability limitations with respect to the first power control dynamic range scheme. According to one embodiment of this aspect, the determination of the first power control dynamic range scheme is further based on a signal type.

According to another aspect of the disclosure, a wireless device is provided. The wireless device includes processing circuitry configured to: determine that the wireless device is configured with a first transmission time interval, TTI, for operating a first physical channel between a network node and the wireless device, the physical channel including a first reference radio resource, compare the first TTI with a first threshold, and determine a power control dynamic range scheme based on the comparison between the first TTI and the first threshold. The power control dynamic range is defined with respect to the first reference radio resource. The processing circuitry is configured to adapt a receiver configuration of the wireless device for receiving transmission on the first physical channel, from the network node, based on the determined power control dynamic range scheme.

According to one embodiment of this aspect, the determination of the first TTI is based on a configuration message received from the network node. According to another aspect of the disclosure, a method for a wireless device is provided. A determination is made that the wireless device is configured with a first transmission time interval, TTI, for operating a first physical channel between a network node and the wireless device. The physical channel includes a first reference radio resource. The first TTI is compared with a first threshold. A power control dynamic range scheme is based on the comparison between the first TTI and the first threshold. The power control dynamic range is defined with respect to the first reference radio resource. A receiver configuration of the wireless device is adapted for receiving transmission on the first physical channel, from the network node, based on the determined power control dynamic range scheme. According to one embodiment of this aspect, the determination of the first TTI is based on a configuration message received from the network node.

According to another aspect of the disclosure, a network node is provided. The network node includes a power control module configured to: configure a wireless device with a transmission time interval, TTI for use in operating a first physical channel between the network node and the wireless device, the physical channel including a first reference radio resource, compare the TTI with a threshold, and determine a first power control dynamic range scheme for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel. The second power control dynamic range is different from the first power control dynamic range. A power of the first reference radio resource in the first power control dynamic range is the same as a power of the first reference radio resource in the second power control dynamic range. The power control module is further configured to transmit, on the first physical channel, to the wireless device using the determined first power control dynamic range scheme. According to one embodiment of this aspect, the network node is distributed among a plurality of network nodes.

According to another aspect of the disclosure, a network node is provided. The network node includes a power control module configured to: configure a first wireless device with a first transmission time interval, TTI, for operating a first physical channel between the network node and the first wireless device, the first physical channel including a first reference radio resource, and configure a second wireless device with a second TTI for operating a second physical channel between the network node and the second wireless device, the second physical channel including a second reference radio resource. The power control module is configured to compare the first TTI and second TTI, determine a first power control dynamic range scheme for the first physical channel based on the comparison between the first TTI and the second TTI, the first power control dynamic range scheme being defined with respect to the first reference radio resource, and determine a second power dynamic range scheme for the second physical channel based on the comparison between the first TTI and the second TTI. The second power control dynamic range scheme is defined with respect to the second reference radio resource. The power control module is configured to apply the determined first power control dynamic range scheme for transmitting, on the first physical channel, to the first wireless device, and apply the determined second power control dynamic range scheme for transmitting, on the second physical channel, to the second wireless device. According to one embodiment of this aspect, the network node is distributed among a plurality of network nodes.

According to another aspect of the disclosure, a wireless device is provided. The wireless device includes a device power module configured to determine that the wireless device is configured with a first transmission time interval, TTI, for operating a first physical channel between a network node and the wireless device. The physical channel including a first reference radio resource. The device power module is configured to compare the first TTI used by the network node for transmitting, on the first physical channel, to the wireless device with a first threshold, determine a power control dynamic range scheme based on the comparison between the first TTI and the first threshold, and adapt a receiver configuration of the wireless device for receiving transmission on the first physical channel, from the network node, based on the determined power control dynamic range scheme.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a block diagram of a Long Term Evolution (LTE) radio frame;
FIG. 2 is a block diagram of a transmit time interval consisting of fourteen Orthogonal Frequency Division Multiplex (OFDM) symbols;
FIG. 3 is a block diagram of a seven symbol Transmission Time Interval (TTI);
FIG. 4 is a block diagram of a four symbol uplink shortened TTI;

FIG. 5 is a block diagram of an exemplary wireless network for adapting power control dynamic range in accordance with the principles of the disclosure;

FIG. 6 is a block diagram of an exemplary network node in accordance with the principles of the disclosure;

FIG. 7 is a block diagram of an exemplary wireless device in accordance with the principles of the disclosure;

FIG. 8 is a flow diagram of a method in a network node for adaptive power control dynamic range in accordance with the principles of the disclosure;

FIG. 9 is a flow diagram of another method in a network node for adaptive power control dynamic range in accordance with the principles of the disclosure;

FIG. 10 is a flow diagram of a method in a wireless device for adaptive power control dynamic range in accordance with the principles of the disclosure;

FIG. 11 is a block diagram of another embodiment of network node 104 in accordance with the principles of the disclosure; and

FIG. 12 is a block diagram of another embodiment of wireless device 102 in accordance with the principles of the disclosure.

DETAILED DESCRIPTION

Before describing in detail exemplary embodiments, it is noted that the embodiments reside primarily in combinations of apparatus components and processing steps related to adapting resource power control dynamic range in the downlink for a shorted transmission time interval. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

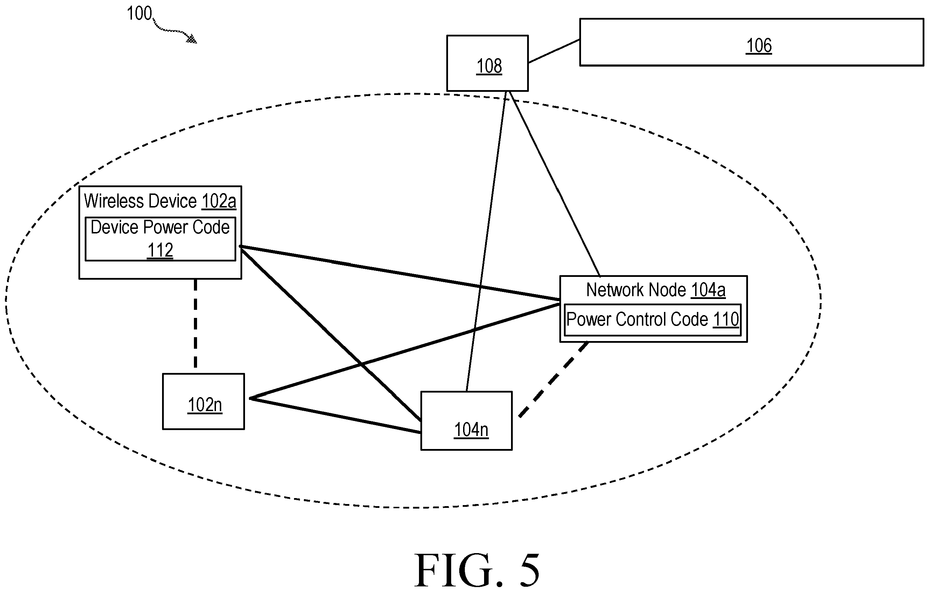

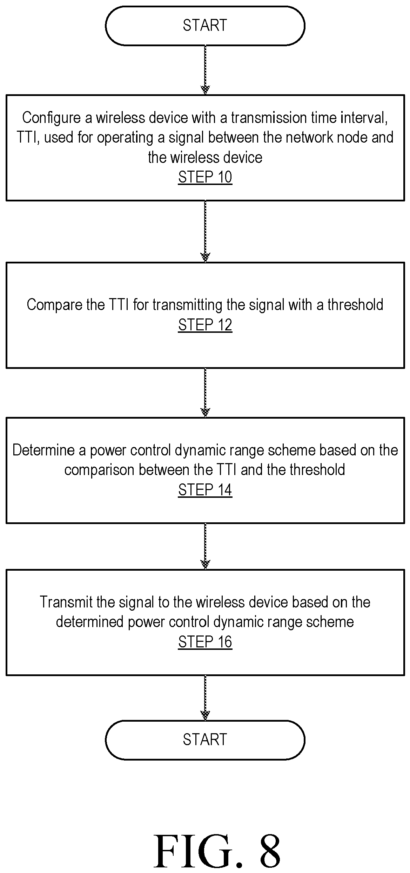

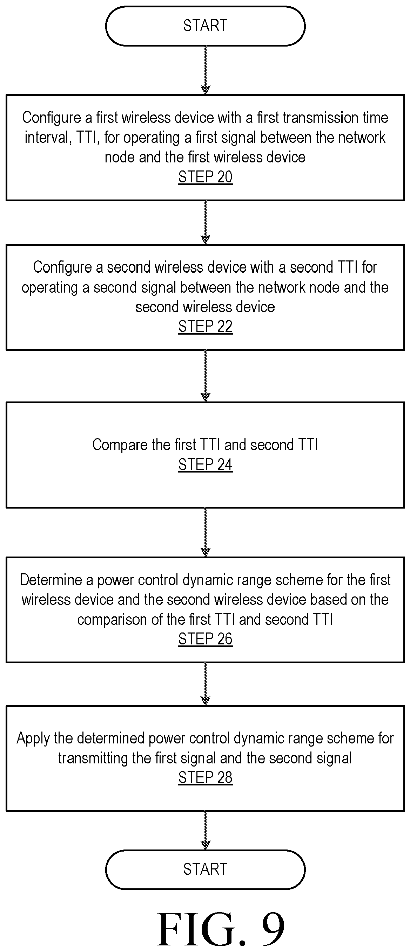

FIG. 5 is a block diagram of an exemplary wireless network 100 that may be used for wireless communication. Wireless network 100 includes wireless devices 102a-102n (e.g., user equipments, etc.), referred to collectively as wireless devices 102, and a plurality of network nodes 104a-104n (e.g., eNBs, etc.), referred to collectively as network node 104 connected to one or more core network nodes 106 via an interconnecting network 108. In one or more embodiments network node 104, e.g., 104a, includes power control code 110 for performing the power control process as described herein such as with respect to FIGS. 8 and 9.

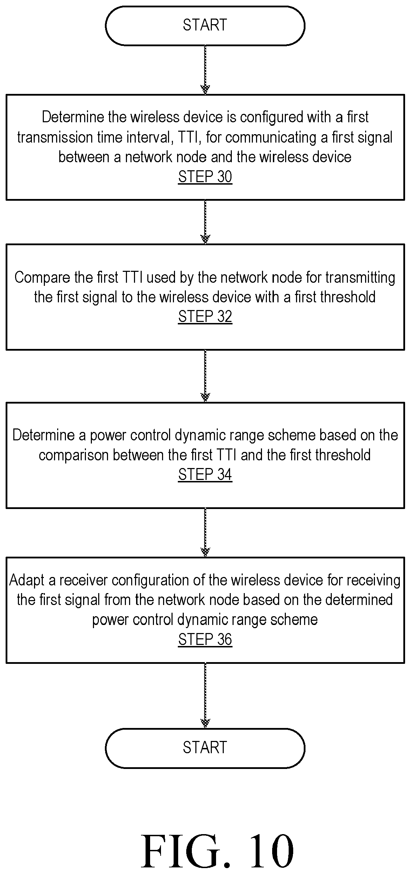

Wireless devices 102 within a coverage area may each be capable of communicating directly with network nodes 104 over a wireless interface. That is, wireless device 102a may transmit wireless signals and/or receive wireless signals from network node 104. The wireless signals may contain voice traffic, data traffic, control signals, and/or any other suitable information, among other data and signals discussed herein. In one or more embodiments, wireless device 102, e.g., 102a, includes device power code 112 for performing the device power process as described herein such as with respect to FIG. 10.

Wireless device 102 is a non-limiting term and refers to any type of wireless device communicating with a network node 104 and/or with another wireless device 102 in a cellular, wireless or mobile communication system. Examples of wireless device 102 are target device, device to device (D2D) wireless device, user equipment (UE), machine type wireless device or wireless device capable of machine to machine (M2M) communication, PDA, iPAD, Tablet, mobile terminals, smart phone, laptop embedded equipped (LEE), laptop mounted equipment (LME), USB dongles, etc.

In some embodiments, generic terminology, "radio network node" or simply "network node" 104, is used, where it can be any kind of network node which may comprise of base station, radio base station, base transceiver station, base station controller, network controller, evolved Node B (eNB), Node B, relay node, access point, radio access point, Remote Radio Unit (RRU) Remote Radio Head (RRH), etc. In this disclosure, any of the above mentioned nodes could become "the first node" and/or "the second node". In one or more embodiments, network node 104 is distributed among a plurality of network nodes 104.

In this disclosure, a first node and a second node are sometimes used to denote two nodes which are either transmitting or receiving in unlicensed spectrum (or a shared spectrum where more than one system operates based on some kind of sharing regulations). An example of a first node could be network node 104, which could be a more general term and can correspond to any type of radio network node or any network node, which communicates with a wireless device and/or with another network node. Examples of network nodes are NodeB, base station (BS), multi-standard radio (MSR) radio node such as MSR BS, eNodeB, gNodeB. MeNB, SeNB, transmission reception point (TRP), network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME etc), O&M, OSS, SON, positioning node (e.g. evolved serving mobile location center (E-SMLC)), minimization drive test (MDT) etc.

Interconnecting network 108 may refer to any interconnecting system capable of transmitting audio, video, signals, data, messages, or any combination of the preceding. Interconnecting network 108 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

Core network node 106 may manage the establishment of communication sessions and various other functionalities for wireless devices 102. Examples of core network node 106 may include MSC, MME, SGW, PGW, O&M, OSS, SON, positioning node (e.g. E-SMLC), MDT node, etc. Wireless devices 102 may exchange certain signals with the core network node using the non-access stratum layer. In non-access stratum signaling, signals between wireless devices 102 and the core network node 106 may be transparently passed through the radio access network. In certain embodiments, network nodes 104 may interface with one or more network nodes over an internode interface. For example, network nodes 104a and 104n may interface over an X2 interface.

A component carrier (CC) also interchangeably referred to as carrier, PCC or SCC is configured at the wireless device by the network node using higher layer signaling, e.g., by sending RRC configuration message to the wireless device. The configured CC is used by the network node for serving the wireless device on the serving cell (e.g. on PCell, PSCell, SCell etc) of the configured CC. The configured CC is also used by the wireless device for performing one or more radio measurements (e.g., RSRP, RSRQ, etc.) on the cells operating on the CC e.g. PCell, SCell or PSCell and neighboring cells.

The term radio access technology, or RAT, may refer to any RAT e.g. UTRA, E-UTRA, narrow band internet of things (NB-IoT), Wi-Fi, Bluetooth, next generation RAT (NR), 4G, 5G, etc. Any of the first and the second nodes may be capable of supporting a single or multiple RATs. A wireless device may be configured to operate in carrier aggregation (CA) implying aggregation of two or more carriers in at least one of DL and UL directions. With CA, a UE can have multiple serving cells, wherein the term 'serving' herein means that the wireless device is configured with the corresponding serving cell and may receive from and/or transmit data to the network node on the serving cell, e.g., on PCell or any of the SCells. The data is transmitted or received via physical channels, e.g., physical downlink shared channel (PDSCH) in DL, physical uplink shared channel (PUSCH) in UL, etc. A component carrier (CC) also interchangeably called as carrier or aggregated carrier, primary CC (PCC) or secondary CC (SCC) is configured at the wireless device by the network node using higher layer signaling, e.g., by sending radio resource control (RRC) configuration message to the wireless device. The configured CC is used by the network node for serving the wireless device on the serving cell (e.g., on the primary cell (PCell), primary second cell (PSCell), secondary cell (SCell), etc.) of the configured CC. The configured CC is also used by the wireless device for performing one or more radio measurements (e.g. reference signal received power (RSRP), requested signal received quality (RSRQ), etc.) on the cells operating on the CC, e.g., PCell, SCell or PSCell and neighboring cells.

The terms signal and signal type as used herein can be any physical signal or physical channel. Examples of physical signals are reference signal or reference radio resource(s) such as primary synchronization signal (PSS), secondary synchronization signal (SSS), cell-specific reference signal (CRS), positioning reference signal (PRS), etc. The term physical channel (e.g., in the context of channel reception) used herein is also called as "channel". Examples of physical channels are Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), structure with information about PUCCH (sPUCCH), structure with information about PDSCH (sPDSCH), structure with information about PDCCH (sPDCCH), structure with information about PUSCH (sPUSCH), MTC physical downlink control channel(MPDCCH), Narrowband Physical Downlink Control Channel (NPDCCH), Narrowband Physical Downlink Shared Channel (NPDSCH), Enhanced Physical Downlink Control Channel (E-PDCCH), Physical Uplink Shared Channel (PUSCH), Physical Uplink Control Channel (PUCCH), Narrowband Physical Uplink Shared Channel (NPUSCH), etc. sPDCCH, sPDSCH, sPUCCH and sPUSCH are physical channels transmitted over shortened TTIs. These channels are analogous to PDCCH, PDSCH, PUCCH and PUSCH, which are transmitted over legacy TTIs of 1 ms. Structure as used herein for one or more embodiments refers to short or shortened PDSCH (i.e., PDSCH used for sTTIs).

The term time resource used herein may correspond to any type of physical resource or radio resource expressed in terms of length of time. Examples of time resources are: symbol, time slot, subframe, radio frame, TTI, interleaving time, etc.

The term TTI used herein may correspond to any time period (T0) over which a physical channel can be encoded and interleaved for transmission. The physical channel is decoded by the receiver over the same time period (T0) over which it was encoded. The TTI may also interchangeably called as short TTI (sTTI), transmission time, slot, sub-slot, mini-slot, mini-subframe etc.

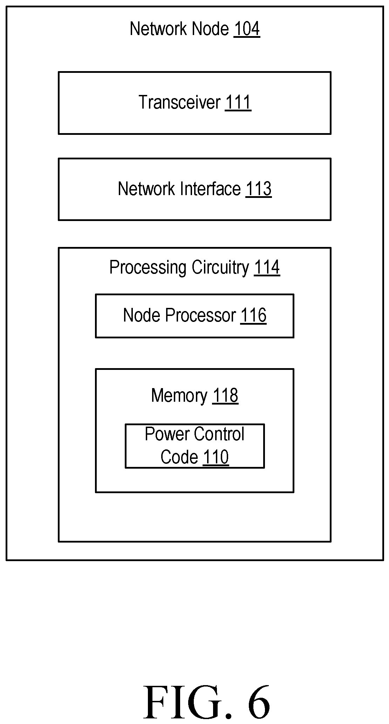

FIG. 6 is a block diagram of exemplary network node 104, in accordance with certain embodiments. Network node 104 includes one or more circuitry. The one or more circuitry may include one or more of a transceiver 111, network interface 113, processing circuitry 114 that includes one or more node processors 116 and memory 118. In some embodiments, the transceiver 111 facilitates transmitting wireless signals to and receiving wireless signals from wireless device 102 (e.g., via an antenna), the one or more processors 116 execute instructions to provide some or all of the functionalities described above as being provided by a network node 104, memory 118 stores the instructions for execution by the one or more node processors 116, and the network interface 113 communicates signals to backend network components, such as a gateway, switch, router, Internet, Public Switched Telephone Network (PSTN), core network nodes or radio network controllers, etc.

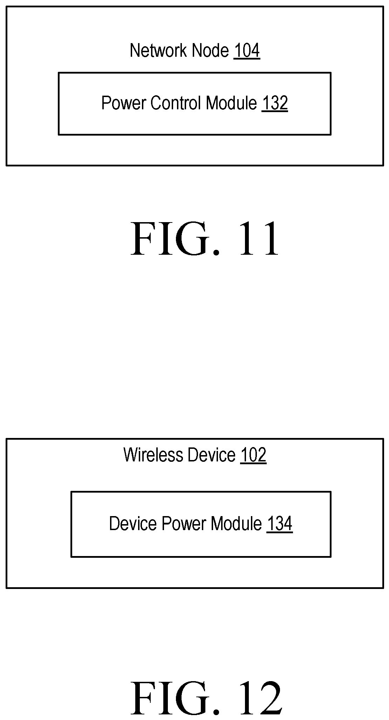

The one or more node processors 116 may include any suitable combination of hardware and software implemented in one or more modules to execute instructions and manipulate data to perform some or all of the described functions of network node 104, such as those described above. In some embodiments, the one or more node processors 116 may include, for example, one or more computers, one or more central processing units (CPUs), one or more microprocessors, one or more applications, one or more application specific integrated circuits (ASICs), one or more field programmable gate arrays (FPGAs) and/or other logic. In certain embodiments, the one or more processors may comprise one or more of the modules discussed below with respect to FIG. 11.

The memory 118 is generally configured to store instructions, such as a computer program, software, an application including one or more of logic, rules, algorithms, code, tables, etc. and/or other instructions capable of being executed by one or more processors. In one or more embodiments, memory 118 is configured to store power control code 110. For example, power control code 110 includes instructions that, when executed by node processor 116, causes node processor 116 to perform the functions described herein such as the functions described with respect to FIGS. 8 and 9. Examples of memory 118 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 113 is communicatively coupled to the node processor 116 and may refer to any suitable device operable to receive input for network node 104, send output from network node 104, perform suitable processing of the input or output or both, communicate to other devices, or any combination of the preceding. The network interface 113 may include appropriate hardware (e.g., port, modem, network interface card, etc.) and software, including protocol conversion and data processing capabilities, to communicate through a network.

Other embodiments of network node 104 may include additional components beyond those shown in FIG. 6 that may be responsible for providing certain aspects of the network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

Transceiver 111, network interface 113, processing circuitry 114, node processor 116 and memory 118 similar to those described with respect to FIG. 6 may be included in other network nodes (such as core network node 106). Other network nodes 104 may optionally include or not include a wireless interface (such as the transceiver described in FIG. 6). Functionalities described may reside within the same radio node and networks node 104 or may be distributed across a plurality of radios nodes and network nodes 104.

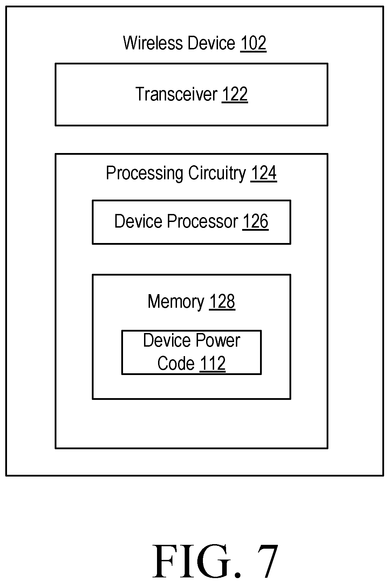

FIG. 7 is a block diagram of an exemplary wireless device 102, in accordance with certain embodiments. Wireless device 102 includes one or more circuitry. The one or more circuitry includes a transceiver 122, processing circuitry 124, one or more device processors 126 (only one shown), and memory 128. In some embodiments, the transceiver 122 facilitates transmitting wireless signals to and receiving wireless signals from network node 104 (e.g., via an antenna), the one or more device processors 126 execute instructions to provide some or all of the functionalities described above as being provided by wireless device 102, and the memory 128 stores the instructions for execution by the one or more device processors 126.

The device processor 126 may include any suitable combination of hardware and software implemented in one or more modules to execute instructions and manipulate data to perform some or all of the described functions of wireless device 102, such as the functions of wireless device 102 described above. In some embodiments, the device processor 126 may include, for example, one or more computers, one or more central processing units (CPUs), one or more microprocessors, one or more applications, one or more application specific integrated circuits (ASICs), one or more field programmable gate arrays (FPGAs) and/or other logic. In certain embodiments, the processor may comprise one or more modules discussed herein.

The memory 128 is generally configured to store instructions, such as a computer program, software, an application including one or more of logic, rules, algorithms, code, tables, etc. and/or other instructions capable of being executed by one or more processors. In one or more embodiments, memory 128 is configured to store device power code 112. For example, device power code 112 includes instructions that, when executed by wireless device 102, causes device processor 126 to perform the functions described herein such as the functions described with respect to FIG. 10. Examples of memory 128 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the processor of wireless device 102.

Other embodiments of wireless device 102 may include additional components beyond those shown in FIG. 7 that may be responsible for providing certain aspects of the wireless device's functionality, including any of the functionality described above and/or any additional functionality (including any functionality necessary to support the solution described above). As just one example, wireless device 102 may include input devices and circuits, output devices, and one or more synchronization units or circuits, which may be part of the one or more processors. Input devices include mechanisms for entry of data into wireless device 102. For example, input devices may include input mechanisms, such as a microphone, input elements, a display, etc. Output devices may include mechanisms for outputting data in audio, video and/or hard copy format. For example, output devices may include a speaker, a display, etc.

The disclosure includes at least the following embodiments: description of a scenario involving different TTI patterns; and several methods in a network node (e.g., BS) to adapt its output power dynamic range depending on the different TTI to optimize DL coverage.

Description of a scenarios involving different TTI patterns

One scenario is described in Table 3.

TABLE 3

| Cases | Carrier combinations | Example (with two carriers, however not limited to two carriers) |
|---|---|---|
| Same TTI pattern is used in different carriers | More than one carriers in the aggregation | A cell Cell1 operating in frequency F1 uses a 1st TTI pattern, while a cell Cell2 operating in frequency F2 uses the same TTI pattern. A UE aggregates Cell1 and Cell2 in one CA configuration. |
| Different TTI patterns are used in different carriers | More than one carriers in the aggregation | A cell Cell1 operating in frequency F1 uses a 1st TTI pattern, while a cell Cell2 operating in frequency F2 uses a 2nd TTI pattern. A UE aggregates Cell1 and Cell2 in one CA configuration. |
| Different TTI patterns are used in UL and DL of any carrier | More than one carriers in the aggregation | A cell Cell1 operating in frequency F1 uses a 1st TTI pattern in UL, while it uses a 2nd TTI pattern in DL. Another cell Cell2 operating in frequency F2 uses the 1st TTI pattern in UL while uses the 2nd TTI pattern in DL. A UE aggregates Cell1 and Cell2 in one CA configuration. |
| | | A cell Cell1 operating in frequency F1 uses a 1st TTI pattern in UL, while it uses a 2nd TTI pattern in DL. Another cell Cell2 operating in frequency F2 uses a 3rd TTI pattern in both UL and DL. A UE aggregates Cell1 and Cell2 in one CA configuration. |

Method in network node 104 of adapting its power control dynamic range according to shortened TTI used to optimize DL coverage is described below.

This embodiment relates to the method in the network node 104 (e.g., BS) whereby network node 104 selects the power control dynamic range based at least in part on the TTI used for a particular wireless device 102. The dynamic range or power control dynamic range in any radio resource (e.g. resource element) is defined with respect to some reference radio resources (e.g. reference signal such as CRS). The dynamic range or power control dynamic range is defined separately for each signal or channel e.g. physical downlink control channel (PDCCH), physical downlink shared channel (PDSCH), etc. As a special case, network node 104 serves one wireless device 102 in a time resource. Network node 104 selects the TTI, determines the power control dynamic range for this wireless device 102 and uses this for DL scheduling/transmitting signals to this wireless device 102. This embodiment is further described below:

First Aspect: Method in a network node of adapting its power control dynamic range according to shortened TTI used to optimize DL coverage

FIG. 8 is a flow diagram of a method in network node 104 for adaptive power control dynamic range, in accordance with one or more embodiments of a first aspect of the present disclosure. This embodiment is related to the method in network node 104 (e.g., base station (BS)) whereby network node 104 selects the power control dynamic range based at least in part on the TTI used for a particular wireless device 102. As a special case, network node 104 serves one wireless device 102 in a time resource. Network node 104 selects the TTI, determines the power control dynamic range for this wireless device 102 and use this power control dynamic range for DL scheduling/transmitting signals to this wireless device 102.

The method in network node 104, according to some embodiments of the first aspect, comprises the following steps:

Step 10: processing circuitry 114 is configured to configure a first wireless device 102 with first TTI (TTI1) used for operating a first signal (S1) between network node 104 and first wireless device 102;

Step 12: processing circuitry 114 is configured to compare TTI1 for transmitting S1 to first wireless device 102 with a threshold (HI);

Step 14: processing circuitry 114 is configured to determine a power control dynamic range scheme based on the comparison between TTI1 and HI;

Step 16: processing circuitry 114 is configured to transmit S1 to first wireless device 102 based on the determined power control dynamic range scheme;

Step 16a: in one or more embodiments, processing circuitry 114 is configured to transmit S1 using a first power control dynamic range (R1) if TTI1 > HI, otherwise transmit S1 with a second power control dynamic range (R2).

Step 18 (in some but not necessarily all embodiments): processing circuitry 114 is configured to transmit or forward the information about the determined power control dynamic range scheme to another node, e.g., first wireless device 102, another wireless device 102, another network node 104, etc.

STEP 10

In this step, processing circuitry 114 of network node 104 configures first wireless device 102 with first TTI (TTI1) used for operating a first signal (S1) between network node 104 and first wireless device 102. The configuration of TTI1 may be performed by transmitting a message, e.g., RRC message, to first wireless device 102.

Prior to this configuration, network node 104 may determine the value of TTI1 or the need to configure TTI1, i.e., specific value. Network node 104 may determine the value of TTI1 based on for example one or more of the following:

- First wireless device 102 capability - whether the first wireless device 102 supports two or more different TTIs e.g. TTI = 1 ms and TTI = 0.14 ms.
- The required first wireless device 102 bit rate.
- The round trip time (RTT) required to deliver data packet between wireless device 102 and network node 104, e.g., shorter TTI is used in case shorter RTT is required.
- Wireless device 102 location with respect to the serving cell. For example, shorter TTI is used if the wireless device 102 is closed to the serving cell e.g. close to network node serving cell1.
- Pre-defined information e.g. relation between TTI1 and frequency band of in which TTI1 will be used
- Pre-defined rule. An example of a rule can be: apply same TTI as used in a reference cell. Examples of reference cell is PCell, PSCell.

STEP 12

In this step, processing circuitry 114 of network node 104 compares or relates the determined value of TTI1 with a threshold (HI). Examples of thresholds are 0.5 ms, 0.14 ms, or X number of symbols, etc. In other words, in one or more embodiments, the one or more thresholds relate to the actual length or duration of a TTI, e.g., 0.5 ms, or a number of symbols, e.g., X number of symbols, that can fit into a TTI. In another example implementation. network node 104 may compare the determined value of TTI1 with two thresholds (H11 and H12). In yet another exemplary implementation, network node 104 may compare the determined value of TTI1 with any number (j) of thresholds (H11, H12, H13, ...H1j).

The thresholds can be pre-defined, obtained from another node (e.g., another network node 104), based on one or more triggering conditions, e.g., different thresholds are associated with different signal quality performance in the uplink and/or in the downlink.

STEP 14

In this step, processing circuitry 114 of network node 104 determines a power control dynamic range scheme based on the comparison or relation between TTI1 and at least HI. Network node 104 determines the power control dynamic range based on the outcome of the comparison or relation. The determination of the dynamic range may further depend on one or more transmission parameters used for transmitting S1. In one or more embodiments, the power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel, the second power control dynamic range being different from the first power control dynamic range. A power of the first reference radio resource in the first power control dynamic range is the same as a power of the first reference radio resource in the second power control dynamic range.

Examples of such parameters are modulation of signals (e.g., QPSK, 16 QAM, etc.). The relation between TTI and dynamic range may be pre-defined or configured by another node. An example of dynamic range selection as function of different TTI lengths is shown in Table 4.

In one example, STEP 14a, network node 104 selects:

- a first power control dynamic range (R1) if TTI1 > HI, or
- a second power control dynamic range (R2) i.e. if TTI1 ≤ H1.

In another example, network node 104 selects:

- a first power control dynamic range (R1) if H11 ≤ TTI1 ≤ H12, or
- a second power control dynamic range (R2) if TTI1 < H11, or
- a third power control dynamic range (R3) if TTI1 > H12.

In yet another example, network node 104 selects a fourth power control dynamic range (R4) which corresponds to TTI1, i.e., R4 is selected if TTI1 = HI. For example, if TTI1 = 2 OFDMA symbols then for QPSK, the sPDSCH maximum power is not larger than 6 Db and the sPDSCH minimum power is not below -6 dB while keeping the power of the reference radio resources (e.g., reference signal such as CRS) the same, i.e., the dynamic range or power control dynamic range in any radio resource (e.g. resource element) is defined with respect to some reference radio resources (e.g. reference signal such as CRS).

TABLE 4 - BS RE power control dynamic range as function of TTI length

| Modulation scheme used on the RE | Configured TTI | RE power control dynamic range (dB) | |
|---|---|---|---|
| | | (down) | (up) |
| QPSK (PDCCH) | 1 ms | -6 | +4 |
| QPSK (PDSCH) | 1 ms | -6 | +3 |
| QPSK (sPDSCH) | 2 OS | -6 | +6 |
| QPSK (sPDSCH) | 7 OS | -6 | +5 |
| 16QAM (PDSCH) | 1 ms | -3 | +3 |
| 16QAM (sPDSCH) | 2 OS | -3 | +5 |
| 16QAM (sPDSCH) | 7 OS | - 3 | +4 |
| 64QAM (PDSCH) | 2, 4, 7 or 14 OS | 0 | 0 |
| 256QAM (PDSCH) | 2, 4, 7 or 14 OS | 0 | 0 |

STEP 16

In this step, processing circuitry 114 of network node 104 transmits S1 to first wireless device 102 based on the determined or selected power control dynamic range scheme as described in the previous step (Step 14). Examples of S1 are DL physical signals (e.g., Demodulation Reference Signal (DMRS), PSS, SSS), DL physical channels (e.g. PDSCH, sPDSCH, PDCCH, sPDCCH, NPDCCH, MPDCCH, NPDSCH, etc.). For example, based on the data block size transmitted to wireless device 102, network node 104 can adjust the DL transmit power of S1 with respect to some reference radio resources (e.g., reference signal such as CRS), where the DL transmit power of S1 is within the minimum value and maximum value of the determined power control dynamic range while the power of the reference radio resources is kept the same or remains unchanged. For example, the maximum power may not exceed 5 dB for sPDSCH for 16 QAM when TTI1 is of 2-OS.

STEP 18

The following step is optional for network node 104. In this step, network node 104 may transmit or forward the information about the determined power control dynamic range scheme to another node, e.g., first wireless device 102, another wireless device 102, another network node 104, etc. The information may be transmitted autonomously or in response to receiving a request from another node. The target network node 104 may use this information for one or more operational tasks, e.g., adaptation of transmission and/or reception parameters etc.

Second Aspect: Method in a network node of adapting its power control dynamic range according to shortened TTI and different TTIs used to optimize DL coverage

FIG. 9 is a flow diagram of a method for adaptive power control dynamic range in network node 104, in accordance with certain embodiments of a second aspect of the present disclosure. This embodiment is related to the method in network node 104 (e.g. BS) whereby network node 104 selects the power control dynamic range for each network node 104 based on the TTI used or selected for plurality of wireless devices 102. As a special case, network node 104 serves two wireless devices 102 within certain time resource(s). The transmission of signals to one wireless device 102 may impact the transmission to another wireless device 102. Therefore, in this embodiment, network node 104 selects the power control dynamic range by taking into account TTIs allocated to plurality of wireless devices 102.

The method in network node 104, according to some embodiments of the first aspect, includes the following steps:

Step 20: processing circuitry 114 configures first wireless device 102 with first TTI (TTI1) used for operating a first signal (S1) between the BS/network node 104 and first wireless device 102.

Step 22: processing circuitry 114 configures second wireless device 102 with second TTI (TTI2) used for operating a second signal (S2) between the BS/network node 104 and second wireless device 102.

Step 24: processing circuitry 114 compares the configured TTIs and determines based on one or more criteria the best or suitable power control dynamic range scheme for each wireless device 102.

Step 26: processing circuitry 114 uses the determined power control dynamic range schemes for transmitting S1 and S2 to first wireless device 102 and second wireless device 102, respectively.

Step 28 (in some but not necessarily all embodiments - optional): processing circuitry 114 transmits or forwards the information about the determined power control dynamic range schemes to another node, e.g., first wireless device 102, second wireless device 102, another wireless device 102, another network node 104, etc.

STEP 20

In this step, processing circuitry 114 of network node 104 configures first wireless device 102 with a first TTI (TTI1) used for operating a signal (S1) between the BS/network node 104 and first wireless device 102. Examples of S1 when receiving signals from BS/network node 104 at first wireless device 102 are DL channels such as PDCCH, PDSCH, sPDCCH, sPDSCH, etc.

Prior to configuring the first wireless device 102, network node 104 may determine the value of TTI1. Network node 104 may determine the value of TTI1 based on for example one or more of the following:

- First wireless device 102 capability - whether first wireless device 102 supports two or more different TTIs, e.g., TTI = 1 ms and TTI = 0.14 ms.
- The required first wireless device 102 bit rate.
- The round trip time (RTT) required to deliver data packet between first wireless device 102 and network node 104, e.g., shorter TTI is used in case shorter RTT is required.
- Wireless device 102 location with respect to the serving cell. For example, shorter TTI is used if first wireless device 102 is closed to the serving cell, e.g., close to the network node serving cell1.
- Pre-defined information, e.g., relation between TTI1 and frequency band of in which TTI1 will be used.
- Pre-defined rule. An example of rules can be: apply same TTI as used in a reference cell. Examples of reference cells including one or more of PCell and PSCell.

STEP 22

In this step, processing circuitry 114 of network node 104 configures a second wireless device 102 with a second TTI (TTI2) used for operating a second signal (SI2) between the BS/network node 104 and second wireless device 102. Examples of SI2 when receiving signals from BS/network node 104 at second wireless device 102 are DL channels such as PDCCH, PDSCH, sPDCCH, sPDSCH, etc. Prior to configuration, network node 104 may determine the value of TTI2 according to the same criteria exposed in Step 10 to select TTI1.

STEP 24

In this step, BS/network node 104 determines the power control dynamic range scheme to be used for each wireless device 102 according the configured TTI. In one or more embodiments, network node 104 compares the first TTI and the second TTI, and determines one or more power control dynamic range schemes for the physical channel based on the comparison, the one or more power control dynamic range schemes being defined with respect to respective reference radio resources. The dynamic range for each TTI can be determined by network node 104 based on one or more of the following:

- Pre-defined rule or pre-defined requirements;
- Autonomous determination by network node 104;
- Recommendation or indication or information received from another node e.g. another network node 104 or wireless device 102;
- Historical data or statistics;
- Performance of the reception of signals at wireless device 102, e.g., signal to noise ratio (SNR) or signal to interference plus noise radio (SINR), block error rate (BLER), hybrid automatic repeat request (HARQ) performance of a channel (e.g. sPDSCH) at wireless device 102; and
- BS/network node 104 capability limitations if any, regarding the dynamic range.

The dynamic range is further determined for specific signal (e.g., sPDSCH) and/or for specific wireless device 102 based on a function of one or more parameters. The one or more of these parameters can be obtained based on any of the principles stated in the disclosure. One example of a general function for determining a parameter such as the maximum output power can be expressed by Equation (1):

$$(PCDynRange1, PCDynRange2) = f\ (TTI1, TTI2, K(n)) \qquad \text{Equation (1)}$$

K(n) could be a scaling factor, itself function of the number of wireless devices 102 respectively with TTI= 2, 4, 7 or 14 OS.
This general function may include:

- First, processing circuitry 114 of network node 104 determines which TTI is the shortest one, for example, an assumption that TTI1 < TTI2 is made.
- processing circuitry 114 of network node 104 determines which power control dynamic range for each wireless device 102, trying to boost the REs scheduled for wireless device 102 with lowest TTI (first wireless device in this example) and de-boost accordingly the REs scheduled for wireless device 102 with highest TTI (e.g., second wireless device 102). The level of boosting could also be determined by a function of the number of wireless devices 102 with shorter TTI and the number of wireless devices 102 with higher TTIs scheduled by network node 104. Note that this scheme allocation is performed by checking network node 104 output power per carrier and, in one or more embodiments, is less than or equal to the maximum output power of the base station.
- By doing so, network node 104 would optimize DL coverage, compensating by transmitting with higher power to wireless devices 102 with shorter TTI.

Specific examples of such general functions are given below.
Based on TTI1 and TTI2 values, network node 104 adapts the RE power control dynamic range as illustrated in Table 5. Network node 104 uses higher power to transmit to wireless devices 102 scheduled with shorter TTI to compensate DL coverage loss due to the short TTI.

TABLE 5 - Example of RE power control dynamic range scheme for two wireless devices 102, i.e., first wireless device 102 and second wireless device 102, scheduled respectively with TTI equal to 14 OS and 2 OS.

| Modulation scheme used on the RE | RE power control dynamic range (dB) | |
| --- | --- | --- |
| | First Wireless Device TTI1 = 14 OS | Second Wireless Device TTI2 = 2 OS |
| QPSK (PDCCH) | -4 | +4 |
| QPSK (PDSCH) | -3 | +3 |
| 16QAM (PDSCH) | -3 | +3 |
| 64QAM (PDSCH) | 0 | 0 |
| 256QAM (PDSCH) | 0 | 0 |

Another arrangement is as described in Table 6. Network node 104 prioritizes control channels and compensates for wireless devices 102 with shorter TTI, impacting less DL transmission to wireless devices 102 with larger TTI.

TABLE 6 - Example of RE power control dynamic range scheme for two wireless devices 102, i.e., first wireless device 102 and second wireless device 102, scheduled respectively with TTI equal to 14 OS and 2 OS, prioritizing control channel.

| Modulation scheme used on the RE | RE power control dynamic range (dB) | |
| --- | --- | --- |
| | First Wireless Device TI1 = 14 OS | Second Wireless Device TTI2 = 2 OS |
| QPSK (PDCCH) | -4 | +4 |
| QPSK (PDSCH) | -1 | +1 |
| 16QAM (PDSCH) | -1 | +1 |
| 64QAM (PDSCH) | 0 | 0 |
| 256QAM (PDSCH) | 0 | 0 |

Previous methods discussed herein illustrates the use of two wireless devices 102, but one or more methods and/or embodiments described herein are also applicable to any number of wireless devices 102 managed by network node 104. Previous methods described herein are applicable to existing standard - 3GPP TS 36.104, and would be further improved following 3GPP TS 36.104 updates.

STEP 26

In this step, processing circuitry 114 of network node 104 transmits S1 and S2 to first wireless device 102 and second wireless device 102, respectively, based on the determined or selected power control dynamic range schemes as described in the previous step, i.e., Step 24. Network node 104 ensures that the downlink transmit power of S1 and S2 stay within the limit defined by the selected schemes.

STEP 28

This step is optional for network node 104. In this step, processing circuitry 114 of network node 104 transmits or forwards the information about the determined power control dynamic range scheme to another node, e.g., first wireless device 102, second wireless device 102, another wireless device, another network node 104, etc. The information may be transmitted autonomously or in response to receiving a request from another node. The network node 104 receiving the information may use the information for one or more operational tasks, e.g., adaptation of transmission and/or reception parameters, etc.

Third Aspect: Method in wireless device 102

FIG. 10 is a flow diagram of a method for adaptive power control dynamic range of device power code 112 in wireless device 102, in accordance with certain embodiments of a second aspect of the present disclosure. The method in first wireless device 102 comprises the steps of:

> Step 30: processing circuitry 124 determines that first wireless device is configured with first TTI (TTI1) used for operating a first signal (S1) between network node 104 and first wireless device 102;
> Step 32: processing circuitry 124 compares TTI1 used by network node 104 for transmitting S1 to first wireless device 102 with a threshold (HI);
> Step 34: processing circuitry 124 determines a power control dynamic range scheme based on the comparison between TTI1 and HI;
> Step 36: processing circuitry 124 adapts a receiver configuration of first wireless device 102 for receiving S1 from network node 104 based on the determined power control dynamic range scheme.

The above steps are described in more detail below.

STEP 30

First wireless device 102, in this embodiment, is assumed to be capable of at least two different TTIs for receiving the same type of signal, e.g., DL data channel such as PDSCH. In this step, processing circuitry 124 of first wireless device 102 determines that it is configured with first TTI (TTI1) which is used for operating a first signal (S1) between network node 104 and first wireless device 102. First wireless device 102 may determine this based on the configuration message received from network node 104, e.g., RRC message.

STEP 32

In this step, processing circuitry 124 of wireless device 102 compares or relates the determined value of TTI1 with a threshold (HI). Examples of thresholds are 0.5 ms, 0.14 ms, X number of symbols, etc. Further examples of thresholds used for the comparison are the same as described in Step 12. In other words, in one or more embodiments, the one or more thresholds relate to the actual length or duration of a TTI, e.g., 0.5 ms, or a number of symbols, e.g., X number of symbols, that can fit into a TTI.

STEP 34

In this step, processing circuitry 124 of wireless device 102 determines a downlink power control dynamic range scheme based on the comparison or relation between TTI1 and HI. The downlink power control dynamic range scheme is used by network node 104 for transmitting DL signals (e.g. S1) to first wireless device 102. The dynamic range or power control dynamic range in any radio resource (e.g. resource element) is defined with respect to some reference radio resources (e.g. reference signal such as CRS) and is defined separately for each signal or channel e.g. physical downlink control channel (PDCCH), physical downlink shared channel (PDSCH), etc. The relation can be pre-defined or the relation/rule to derive the power control dynamic range scheme based on the TTI can be signaled to first wireless device 102 by network node 104. The examples of selecting or determining the power control dynamic range based on the TTI described in Step 14 with respect to the embodiment for network node 104 are also applicable for first wireless device 102, i.e., first wireless device 102 uses the same principles as described in Step 14.

STEP 36

In this step, processing circuitry 124 of first wireless device 102 uses the determined power control dynamic range scheme based on TTI1, for adapting a receiver configuration of the receiver of first wireless device 102. The adapted receiver is used by first wireless device 102 for receiving or decoding signals, S1, from network node 104. For example, if the maximum value of the DL transmit power associated with the determined power control dynamic range with which the signals are transmitted to first wireless device 102 by network node 104 is smaller than a power threshold (e.g., 4 dB), then first wireless device 102 may use more robust receiver. But if the maximum value of the DL transmit power associated with the determined power control dynamic range is not smaller than the power threshold, then first wireless device 102 may apply less robust receiver for receiving S1 from network node 104. A more robust receiver mitigates interference more effectively compared to the receiver which is less robust. However former receiver (which is more robust) may consume more power and requires more processing and complex operations compared to the latter receiver type.

In one or more embodiments incorporate the existing standard

The following sections can be modified in 3GPP TS 36.104 v14.1.0. The changes are in bolded text in the following sections:

6.3.1 RE Power control dynamic range

The RE power control dynamic range is the difference between the power of an RE and the average RE power for a BS at maximum output power for a specified reference condition.

6.3.1.1 requirements

RE power control dynamic range:

TABLE 7 - E-UTRA BS RE power control dynamic range

| Modulation scheme used on the RE | Configured TTI | RE power control dynamic range (dB) | |
|---|---|---|---|
| | | (down) | (up) |
| QPSK (PDCCH) | 14 OS - 1 ms | -6 | +4 |
| QPSK (PDSCH) | 14 OS - 1 ms | -6 | +3 |
| **QPSK (sPDCCH)** | **2, 4 or 7 OS** | **[-6]** | **[+6]** |
| **QPSK (sPDSCH)** | **2, 4 or 7 OS** | **[-6]** | **[+5]** |
| 16QAM (PDSCH) | 14 OS - 1 ms | -3 | +3 |
| **16QAM (sPDSCH)** | **2, 4 or 7 OS** | **[-3]** | **[+5]** |
| 64QAM (PDSCH) | 2, 4, 7 or 14 OS | 0 | 0 |
| 256QAM (PDSCH) | 2, 4, 7 or 14 OS | 0 | 0 |
| NOTE 1: The output power per carrier shall always be less or equal to the maximum output power of the base station. | | | |

FIG. 11 is a block diagram of another embodiment of network node 104. Network node 104 includes power control module 132 for performing a one or a combination of steps that may include steps such as STEPS 10, 12, 14, 16, 18, 20, 22, 24, 26 and 28 in FIGS. 8-9. In certain embodiments, the power control module 132 may be implemented using one or more node processors 116 and/or processing circuitry 114, such as described with respect to FIG. 6. The modules may be integrated or separated in any manner suitable for performing the described functionality.

FIG. 12 is a block diagram of another embodiment of wireless device 102. Wireless device 102 includes device power module 134. In certain embodiments, the device power module may perform one or a combination of steps that may include steps such as Step 30, 32, 34 and 36 in FIG. 10. In certain embodiments, the device power module 134 may be implemented using one or more device processors 126 and/or processing circuitry 124, such as described with respect to FIG. 7. The module(s) may be integrated or separated in any manner suitable for performing the described functionality.

Some Example Embodiments:

According to one aspect of the disclosure, a network node 104 is provided. The network node 104 includes processing circuitry 114 including a processor 116 and a memory 118. The processing circuitry 114 is configured to: configure a wireless device 102 with a transmission time interval, TTI for use in operating a first physical channel between the network node 104 and the wireless device 102, the physical channel including a first reference radio resource, compare the TTI with a threshold, and determine a first power control dynamic range scheme for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel, the second power control dynamic range being different from the first power control dynamic range. A power of the first reference radio resource in the first power control dynamic range is the same as a power of the first reference radio resource in the second power control dynamic range. The processing circuitry 114 is configured to transmit, on the first physical channel, to the wireless device 102 using the determined first power control dynamic range scheme.

According to one embodiment of this aspect, the processing circuitry 114 is further configured to: determine the value of the TTI based on at least one taken from a group consisting of: whether the wireless device 102 supports at least two different TTIs, a wireless device bit rate, a round trip time to deliver a data packet between the wireless device 102 and the network node 104, and a location of the wireless device 102 with respect to a network node. The TTI configured for the wireless device corresponds to the determined TTI. According to one embodiment of this aspect, the TTI is a shorten TTI that is less than 1ms. The shorten TTI including one taken from a group consisting of: 2-Orthogonal frequency-division multiplexing (OFDM) symbols, 4-OFDM symbols and 7-OFDM symbols. According to one embodiment of this aspect, the processing circuitry 114 is further configured to: configure the wireless device 102 with the transmission time interval, TTI for use in operating a second physical channel between the network node 104 and the wireless device 102. The second physical channel including a second reference radio resource and being different from the first physical channel. The processing circuitry 114 is further configured to determine a second power control dynamic range scheme for the second physical channel based on the comparison between the TTI and the threshold. The second power control dynamic range is defined with respect to the second reference radio resource. The determination of the second power control dynamic range scheme includes: if the TTI is greater than the second threshold, selecting a third power control dynamic range for the first physical channel, the first threshold being different from the second threshold, and if the TTI is less than the second threshold, selecting a fourth power control dynamic range for the first physical channel, the third power control dynamic range is different from the fourth power control dynamic range. A power of the second reference radio resource in the third power control dynamic range being the same as a power of the second reference radio resource in the fourth power control dynamic range. The processing circuitry 114 is further configured to transmit, on the second physical channel, to the wireless device 102 using the determined second power control dynamic range scheme.

According to one embodiment of this aspect, the first physical channel is a PDCCH and the second physical channel is a PDSCH. According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), structure with information about PUCCH (sPUCCH), structure with information about PDSCH (sPDSCH), Structure with information about PDCCH (sPDCCH), structure with information about PUSCH (sPUSCH), MTC physical downlink control channel (MPDCCH), Narrowband Physical Downlink Control Channel (NPDCCH), Narrowband Physical Downlink Shared Channel (NPDSCH), Enhanced Physical Downlink Control Channel (E-PDCCH), Physical Uplink Shared Channel (PUSCH), Physical Uplink Control Channel (PUCCH), and Narrowband Physical Uplink Shared Channel (NPUSCH). According to one embodiment of this aspect, the first reference radio resource is at least part of a reference signal taken from a group of: primary synchronization signal (PSS), secondary synchronization signal (SSS), cell-specific reference signal (CRS), and positioning reference signal (PRS).

According to another aspect of the disclosure, a method for a network node 104 is provided. A wireless device 102 is configured with a transmission time interval, TTI for use in operating a first physical channel between the network node 104 and the wireless device 102. The physical channel includes a first reference radio resource. The TTI is compared with a threshold. A first power control dynamic range scheme is determined for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel, the second power control dynamic range being different from the first power control dynamic range. A power of the first reference radio resource in the first power control dynamic range is the same as a power of the first reference radio resource in the second power control dynamic range. Transmission is performed, on the first physical channel, to the wireless device using the determined first power control dynamic range scheme.

According to one embodiment of this aspect, a value of the TTI is determined based on at least one taken from a group consisting of: whether the wireless device 102 supports at least two different TTIs; a wireless device bit rate; a round trip time to deliver a data packet between the wireless device 102 and the network node 104; and a location of the wireless device 102 with respect to a network node 104. The TTI is configured for the wireless device 102 corresponding to the determined TTI. According to one embodiment of this aspect, the TTI is a shortened TTI that is less than 1ms, the shorten TTI including one taken from a group consisting of: 2- Orthogonal frequency-division multiplexing (OFDM) symbols, 4-OFDM symbols and 7-OFDM symbols. According to one embodiment of this aspect, the wireless device 102 is configured with the transmission time interval, TTI for use in operating a second physical channel between the network node 104 and the wireless device 102. The second physical channel includes a second reference radio resource and being different from the first physical channel. A second power control dynamic range scheme is determined for the second physical channel based on the comparison between the TTI and the threshold. The second power control dynamic range is defined with respect to the second reference radio resource. The determination of the second power control dynamic range scheme includes: if the TTI is greater than the second threshold, selecting a third power control dynamic range for the first physical channel, the first threshold being different from the second threshold, and if the TTI is less than the second threshold, selecting a fourth power control dynamic range for the first physical channel, the third power control dynamic range being different from the fourth power control dynamic range. A power of the second reference radio resource in the third power control dynamic range is the same as a power of the second reference radio resource in the fourth power control dynamic range. A transmission is performed, on the second physical channel, to the wireless device 102 using the determined second power control dynamic range scheme.

According to one embodiment of this aspect, the first physical channel is a PDCCH and the second physical channel is a PDSCH. According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), shortened PDSCH (sPDSCH), shortened PDCCH (sPDCCH), MTC physical downlink control channel (MPDCCH), Narrowband Physical Downlink Control Channel (NPDCCH), Narrowband Physical Downlink Shared Channel (NPDSCH), Enhanced Physical Downlink Control Channel (E-PDCCH). According to one embodiment of this aspect, the first reference radio resource is at least part of a reference signal. According to one embodiment of this aspect, the reference signal is taken from a group consisting of: primary synchronization signal (PSS), secondary synchronization signal (SSS), cell-specific reference signal (CRS), and positioning reference signal (PRS).

16. According to another aspect of this disclosure, a network node 104 is provided. The network node 104 includes a processing circuitry 114 configured to: configure a first wireless device 102 with a first transmission time interval, TTI, for operating a first physical channel between the network node 104 and the first wireless device 102, the first physical channel including a first reference radio resource, and configure a second wireless device 102 with a second TTI for operating a second physical channel between the network node 104 and the second wireless device 102. The second physical channel includes a second reference radio resource. The processing circuitry 114 is configured to compare the first TTI and second TTI, and determine a first power control dynamic range scheme for the first physical channel based on the comparison between the first TTI and the second TTI. The first power control dynamic range scheme is defined with respect to the first reference radio resource. A second power dynamic range scheme is determined for the second physical channel based on the comparison between the first TTI and the second TTI. The second power control dynamic range scheme is defined with respect to the second reference radio resource. The determined first power control dynamic range scheme is applied for transmitting, on the first physical channel, to the first wireless device 102. The determined second power control dynamic range scheme is applied for transmitting, on the second physical channel, to the second wireless device 102.

According to one embodiment of this aspect, the processing circuitry 114 is further configured to determine a value of the first TTI based on at least one taken from a group consisting of: whether the first wireless device 102 supports at least two different TTIs, a first wireless device bit rate, a round trip time to deliver a data packet between first wireless device 102 and the network node 104, and a location of the first wireless device 102 with respect to a serving cell. According to one embodiment of this aspect, the first power control dynamic range scheme for each TTI is determined based on at least one taken from a group consisting of: at least one predefined requirement, an indication received from another network node 104, historical data, performance of reception of respective signals at the first wireless device 102 and at the second wireless device 102, and network node 104 capability limitations with respect to the first power control dynamic range scheme.

According to one embodiment of this aspect, the first power control dynamic range scheme is determined based on a signal type. According to one embodiment of this aspect, the signal type is any one taken from the group consisting of a physical signal and a physical channel. According to one embodiment of this aspect, the physical signal is a reference signal taken from the group of: a primary synchronization signal (PSS), secondary synchronization signal (SSS), cell-specific reference signal (CRS), and positioning reference signal (PRS). According to one embodiment of this aspect, the physical channel is taken from a group consisting of: Master Information Block (MIB), Physical Broadcast Channel (PBCH), Narrowband Physical Broadcasting Channel (NPBCH), Physical Dedicated Control Channel (PDCCH), Physical Downlink Shared Channel (PDSCH), structure with information about PUCCH (sPUCCH), structure with information about shortened PDSCH (sPDSCH), Structure with information about shortened PDCCH (sPDCCH), structure with information about PUSCH (sPUSCH), MTC physical downlink control channel (MPDCCH), Narrowband Physical Downlink Control Channel (NPDCCH), Narrowband Physical Downlink Shared Channel (NPDSCH), Enhanced Physical Downlink Control Channel (E-PDCCH).

According to another aspect of the disclosure, a method for a network node 104 is provided. A first wireless device 102 is configured with a first transmission time interval, TTI, for operating a first physical channel between the network node 104 and the first wireless device 102. The first physical channel includes a first reference radio resource. A second wireless device 102 is configured with a second TTI for operating a second physical channel between the network node 104 and the second wireless device 102. The second physical channel includes a second reference radio resource. The first TTI and second TTI are compared. A first power control dynamic range scheme is determined for the first physical channel based on the comparison between the first TTI and the second TTI. The first power control dynamic range scheme is defined with respect to the first reference radio resource. A second power dynamic range scheme is determined for the second physical channel based on the comparison between the first TTI and the second TTI. The second power control dynamic range scheme is defined with respect to the second reference radio resource. The determined first power control dynamic range scheme is applied for transmitting, on the first physical channel, to the first wireless device 102. The determined second power control dynamic range scheme is applied for transmitting, on the second physical channel, to the second wireless device 102.

According to one embodiment of this aspect, a value of the first TTI is determined based on at least one taken from the group consisting of: whether the first wireless device supports at least two different TTIs; a first wireless device bit rate; a round trip time to deliver a data packet between first wireless device 102 and the network node 104; and a location of the first wireless device 102 with respect to a serving cell. According to one embodiment of this aspect, the determination of the first power control dynamic range scheme is further based on at least one taken from a group consisting of: at least one predefined requirement; an indication received from another network node 104; historical data; performance of reception of respective signals at the first wireless device 102 and at the second wireless device 102; and network node capability limitations with respect to the first power control dynamic range scheme. According to one embodiment of this aspect, the determination of the first power control dynamic range scheme is further based on a signal type.

According to another aspect of the disclosure, a wireless device 102 is provided. The wireless device 102 includes processing circuitry 124 configured to: determine that the wireless device 102 is configured with a first transmission time interval, TTI, for operating a first physical channel between a network node 104 and the wireless device 102, the physical channel including a first reference radio resource, compare the first TTI with a first threshold, and determine a power control dynamic range scheme based on the comparison between the first TTI and the first threshold. The power control dynamic range is defined with respect to the first reference radio resource. The processing circuitry is configured to adapt a receiver configuration of the wireless device 102 for receiving transmission on the first physical channel, from the network node 104, based on the determined power control dynamic range scheme. According to one embodiment of this aspect, the determination of the first TTI is based on a configuration message received from the network node 104.

According to another aspect of the disclosure, a method for a wireless device 102 is provided. A determination is made that the wireless device 102 is configured with a first transmission time interval, TTI, for operating a first physical channel between a network node 104 and the wireless device 102. The physical channel includes a first reference radio resource.

The first TTI is compared with a first threshold. A power control dynamic range scheme is based on the comparison between the first TTI and the first threshold. The power control dynamic range is defined with respect to the first reference radio resource. A receiver configuration of the wireless device 102 is adapted for receiving transmission on the first physical channel, from the network node 104, based on the determined power control dynamic range scheme. According to one embodiment of this aspect, the determination of the first TTI is based on a configuration message received from the network node 104.

According to another aspect of the disclosure, a network node 104 is provided. The network node 104 includes a power control module 132 configured to: configure a wireless device 102 with a transmission time interval, TTI for use in operating a first physical channel between the network node 104 and the wireless device 102, the physical channel including a first reference radio resource, compare the TTI with a threshold, and determine a first power control dynamic range scheme for the first physical channel based on the comparison between the TTI and the threshold. The power control dynamic range is defined with respect to the first reference radio resource. The determination of the first power control dynamic range scheme includes: if the TTI is greater than the threshold, selecting a first power control dynamic range for the first physical channel, and if the TTI is less than the threshold, selecting a second power control dynamic range for the first physical channel. The second power control dynamic range is different from the first power control dynamic range. A power of the first reference radio resource in the first power control dynamic range is the same as a power of the first reference radio resource in the second power control dynamic range. The power control module is further configured to transmit, on the first physical channel, to the wireless device 102 using the determined first power control dynamic range scheme.

According to another aspect of the disclosure, a network node 104 is provided. The network node 104 includes a power control module 132 configured to: configure a first wireless device 102 with a first transmission time interval, TTI, for operating a first physical channel between the network node 104 and the first wireless device 102, the first physical channel including a first reference radio resource, and configure a second wireless device 102 with a second TTI for operating a second physical channel between the network node 104 and the second wireless device 102, the second physical channel including a second reference radio resource. The power control module 132 is configured to compare the first TTI and second TTI, determine a first power control dynamic range scheme for the first physical channel based on the comparison between the first TTI and the second TTI, the first power control dynamic range scheme being defined with respect to the first reference radio resource, and determine a second power dynamic range scheme for the second physical channel based on the comparison between the first TTI and the second TTI. The second power control dynamic range scheme is defined with respect to the second reference radio resource. The power control module 132 is configured to apply the determined first power control dynamic range scheme for transmitting, on the first physical channel, to the first wireless device 102, and apply the determined second power control dynamic range scheme for transmitting, on the second physical channel, to the second wireless device 102.

According to another aspect of the disclosure, a wireless device 102 is provided. The wireless device 102 includes a device power module 134 configured to determine that the wireless device (102) is configured with a first transmission time interval, TTI, for operating a first physical channel between a network node 104 and the wireless device 102. The physical channel including a first reference radio resource. The device power module 134 is configured to compare the first TTI used by the network node 104 for transmitting, on the first physical channel, to the wireless device 102 with a first threshold, determine a power control dynamic range scheme based on the comparison between the first TTI and the first threshold, and adapt a receiver configuration of the wireless device 102 for receiving transmission on the first physical channel, from the network node 104, based on the determined power control dynamic range scheme.

Any two or more embodiments described in this document may be combined in any way with each other. Furthermore, the described embodiments are not limited to the described radio access technologies (e.g., LTE, NR). That is, the described embodiments can be adapted to other radio access technologies.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order. Generally, all terms used in the disclosure are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

Although this disclosure has been described in terms of certain embodiments, alterations and permutations of the embodiments will be apparent to those skilled in the art. Accordingly, the above description of the embodiments does not constrain this disclosure.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings.

**Claims**

**1.** A network node (104), comprising:
processing circuitry (114) including a processor (116) and a memory (118), the processing circuitry (114) configured to:

    configure a wireless device (102) with a transmission time interval, TTI, for use in operating a first physical channel between the network node (104) and the wireless device (102), the physical channel including a first reference radio resource;
    compare the TTI with a threshold;
    determine a first power control dynamic range scheme for the first physical channel based on the comparison between the TTI and the threshold, the power control dynamic range being defined with respect to the first reference radio resource, the determination of the first power control dynamic range scheme includes:

        if the TTI is greater than the threshold, selecting a first power control dynamic range for the first physical channel;
        if the TTI is less than the threshold, selecting a second power control dynamic range for the first physical channel, the second power control dynamic range being different from the first power control dynamic range; a power of the first reference radio resource in the first power control dynamic range being the same as a power of the first reference radio resource in the second power control dynamic range; and

    transmit, on the first physical channel, to the wireless device (102) using the determined first power control dynamic range scheme.

**2.** The network node (104) of Claim 1, wherein the processing circuitry (114) is further configured to:
determine the value of the TTI based on at least one taken from a group consisting of:

    whether the wireless device (102) supports at least two different TTIs;
    a wireless device bit rate;
    a round trip time to deliver a data packet between the wireless device (102) and the network node (104); and
    a location of the wireless device (102) with respect to a network node (104).

**3.** The network node (104) of any one of Claims 1-2, wherein the TTI is a shorten TTI that is less than 1ms, the shorten TTI including one taken from a group consisting of: 2-Orthogonal frequency-division multiplexing (OFDM) symbols, 4-OFDM symbols and 7-OFDM symbols.

4. The network node (104) of any one of Claims 1-3, wherein the processing circuitry (114) is further configured to:

> configure the wireless device (102) with the transmission time interval, TTI, for use in operating a second physical channel between the network node (104) and the wireless device (102), the second physical channel including a second reference radio resource and being different from the first physical channel;
> determine a second power control dynamic range scheme for the second physical channel based on the comparison between the TTI and the threshold, the second power control dynamic range being defined with respect to the second reference radio resource, the determination of the second power control dynamic range scheme including:
>
>> if the TTI is greater than the second threshold, selecting a third power control dynamic range for the first physical channel, the first threshold being different from the second threshold;
>> if the TTI is less than the second threshold, selecting a fourth power control dynamic range for the first physical channel, the third power control dynamic range being different from the fourth power control dynamic range;
>> a power of the second reference radio resource in the third power control dynamic range being the same as a power of the second reference radio resource in the fourth power control dynamic range; and
>
> transmit, on the second physical channel, to the wireless device (102) using the determined second power control dynamic range scheme.

5. A network node (104), comprising:
processing circuitry (114) configured to:

> configure a first wireless device (102) with a first transmission time interval, TTI, for operating a first physical channel between the network node (104) and the first wireless device (102), the first physical channel including a first reference radio resource;
> configure a second wireless device (102) with a second TTI for operating a second physical channel between the network node (104) and the second wireless device (102), the second physical channel including a second reference radio resource;
> compare the first TTI and second TTI;
> determine a first power control dynamic range scheme for the first physical channel based on the comparison between the first TTI and the second TTI, the first power control dynamic range scheme being defined with respect to the first reference radio resource;
> determine a second power dynamic range scheme for the second physical channel based on the comparison between the first TTI and the second TTI, the second power control dynamic range scheme being defined with respect to the second reference radio resource;
> apply the determined first power control dynamic range scheme for transmitting, on the first physical channel, to the first wireless device (102); and
> apply the determined second power control dynamic range scheme for transmitting, on the second physical channel, to the second wireless device (102).

6. The network node (104) of Claim 5, wherein the processing circuitry (114) is further configured to determine a value of the first TTI based on at least one taken from a group consisting of:

> whether the first wireless device (102) supports at least two different TTIs;
> a first wireless device bit rate;
> a round trip time to deliver a data packet between first wireless device (102) and the network node (104); and
> a location of the first wireless device (102) with respect to a serving cell.

7. The network node (104) of any of Claims 5-6, wherein the first power control dynamic range scheme for each TTI is determined based on at least one taken from a group consisting of:

> at least one predefined requirement;
> an indication received from another network node (104);
> historical data;
> performance of reception of respective signals at the first wireless device (102) and at the second wireless device (102); and

network node (104) capability limitations with respect to the first power control dynamic range scheme.

8. The network node (104) of any of Claims 5-7, wherein the first power control dynamic range scheme is determined based on a signal type.

9. The network node (104) of Claim 8, wherein the signal type is any one taken from the group consisting of a physical signal and a physical channel.

10. The network node (104) of Claim 9, wherein the physical signal is a reference signal taken from the group of: a primary synchronization signal (PSS), secondary synchronization signal (SSS), cell-specific reference signal (CRS), and positioning reference signal (PRS).

12. A wireless device (102), comprising:
processing circuitry (124) configured to:

determine that the wireless device (102) is configured with a first transmission time interval, TTI, for operating a first physical channel between a network node (104) and the wireless device (102), the physical channel including a first reference radio resource;
compare the first TTI with a first threshold;
determine a power control dynamic range scheme based on the comparison between the first TTI and the first threshold, the power control dynamic range being defined with respect to the first reference radio resource; and
adapt a receiver configuration of the wireless device (102) for receiving transmission on the first physical channel, from the network node (104), based on the determined power control dynamic range scheme.

13. The wireless device (102) of Claim 12, wherein the determination of the first TTI is based on a configuration message received from the network node (104).

14. A method for a wireless device, the method comprising:

determining that the wireless device is configured with a first transmission time interval, TTI, for operating a first physical channel between a network node and the wireless device (Step 30), the physical channel including a first reference radio resource;
comparing the first TTI a first threshold (Step 32);
determining a power control dynamic range scheme based on the comparison between the first TTI and the first threshold (Step 34), the power control dynamic range being defined with respect to the first reference radio resource; and
adapting a receiver configuration of the wireless device for receiving transmission on the first physical channel, from the network node, based on the determined power control dynamic range scheme (Step 36).

15. The method of Claims 14, wherein the determination of the first TTI is based on a configuration message received from the network node.

**Patentansprüche**

1. Netzwerkknoten (104), umfassend:

Verarbeitungsschaltungen (114), die einen Prozessor (116) und einen Speicher (118) einschließen, wobei die Verarbeitungsschaltungen (114) dazu konfiguriert sind:

ein drahtloses Gerät (102) mit einem Übertragungszeitintervall, TTI, zur Verwendung im Betrieb eines ersten physikalischen Kanals zwischen dem Netzwerkknoten (104) und dem drahtlosen Gerät (102) zu konfigurieren, wobei der physikalische Kanal eine erste Referenz-Funkressource einschließt;
das TTI mit einer Schwelle zu vergleichen;
auf Basis des Vergleichs zwischen dem TTI und der Schwelle ein erstes Leistungssteuerungs-Dynamikbereichsschema für den ersten physikalischen Kanal zu bestimmen, wobei der Leistungssteuerungs-Dynamikbereich in Bezug auf die erste Referenz-Funkressource definiert wird, wobei das Bestimmen des ersten Leistungssteuerungs-Dynamikbereichsschemas einschließt:

wenn das TTI größer ist als die Schwelle, Auswählen eines ersten Leistungssteuerungs-Dynamikbereichs für den ersten physikalischen Kanal;

wenn das TTI kleiner ist als die Schwelle, Auswählen eines zweiten Leistungssteuerungs-Dynamikbereichs für den ersten physikalischen Kanal, wobei sich der zweite Leistungssteuerungs-Dynamikbereich vom ersten Leistungssteuerungs-Dynamikbereich unterscheidet;

wobei eine Leistung der ersten Referenz-Funkressource im ersten Leistungssteuerungs-Dynamikbereich die gleiche ist wie eine Leistung der ersten Referenz-Funkressource im zweiten Leistungssteuerungs-Dynamikbereich; und

Übertragen auf dem ersten physikalischen Kanal an das drahtlose Gerät (102) unter Verwendung des bestimmten ersten Leistungssteuerungs-Dynamikbereichsschemas.

**2.** Netzwerkknoten (104) nach Anspruch 1, wobei die Verarbeitungsschaltungen (114) weiter dazu konfiguriert sind: den Wert des TTI auf Basis von mindestens einem zu bestimmen, ausgewählt aus einer Gruppe bestehend aus:

ob das drahtlose Gerät (102) mindestens zwei unterschiedliche TTIs unterstützt;

einer Bitrate des drahtlosen Geräts;

einer Umlaufzeit, um ein Datenpaket zwischen dem drahtlosen Gerät (102) und dem Netzwerkknoten (104) zu liefern; und

einem Standort des drahtlosen Geräts (102) in Bezug auf einen Netzwerkknoten (104).

**3.** Netzwerkknoten (104) nach einem der Ansprüche 1-2, wobei es sich bei dem TTI um ein verkürztes TTI handelt, das weniger als 1 ms beträgt, wobei das verkürzte TTI eines einschließt, ausgewählt aus einer Gruppe bestehend aus: 2 Orthogonal-Frequenzmultiplex- (OFDM) Symbolen, 4 OFDM-Symbolen, und 7 OFDM-Symbolen.

**4.** Netzwerkknoten (104) nach einem der Ansprüche 1-3, wobei die Verarbeitungsschaltungen (114) weiter dazu konfiguriert sind:

das drahtlose Gerät (102) mit dem Übertragungszeitintervall, TTI, zur Verwendung im Betrieb eines zweiten physikalischen Kanals zwischen dem Netzwerkknoten (104) und dem drahtlosen Gerät (102) zu konfigurieren, wobei der zweite physikalische Kanal eine zweite Referenz-Funkressource einschließt und sich vom ersten physikalischen Kanal unterscheidet;

auf Basis des Vergleichs zwischen dem TTI und der Schwelle ein zweites Leistungssteuerungs-Dynamikbereichsschema für den zweiten physikalischen Kanal zu bestimmen, wobei der zweite Leistungssteuerungs-Dynamikbereich in Bezug auf die zweite Referenz-Funkressource definiert wird, wobei das Bestimmen des zweiten Leistungssteuerungs-Dynamikbereichsschemas einschließt:

wenn das TTI größer ist als die zweite Schwelle, Auswählen eines dritten Leistungssteuerungs-Dynamikbereichs für den ersten physikalischen Kanal, wobei sich die erste Schwelle von der zweiten Schwelle unterscheidet;

wenn das TTI kleiner ist als die zweite Schwelle, Auswählen eines vierten Leistungssteuerungs-Dynamikbereichs für den ersten physikalischen Kanal, wobei sich der dritte Leistungssteuerungs-Dynamikbereich vom vierten Leistungssteuerungs-Dynamikbereich unterscheidet;

wobei eine Leistung der zweiten Referenz-Funkressource im dritten Leistungssteuerungs-Dynamikbereich die gleiche ist wie eine Leistung der zweiten Referenz-Funkressource im vierten Leistungssteuerungs-Dynamikbereich; und

Übertragen auf dem zweiten physikalischen Kanal an das drahtlose Gerät (102) unter Verwendung des bestimmten zweiten Leistungssteuerungs-Dynamikbereichsschemas.

**5.** Netzwerkknoten (104), umfassend:
Verarbeitungsschaltungen (114), die dazu konfiguriert sind:

ein erstes drahtloses Gerät (102) mit einem ersten Übertragungszeitintervall, TTI, für Betrieb eines ersten physikalischen Kanals zwischen dem Netzwerkknoten (104) und dem ersten drahtlosen Gerät (102) zu konfigurieren, wobei der erste physikalische Kanal eine erste Referenz-Funkressource einschließt;

ein zweites drahtloses Gerät (102) mit einem zweiten TTI für Betrieb eines zweiten physikalischen Kanals zwischen dem Netzwerkknoten (104) und dem zweiten drahtlosen Gerät (102) zu konfigurieren, wobei der zweite physikalische Kanal eine zweite Referenz-Funkressource einschließt;

das erste TTI und zweite TTI zu vergleichen;

auf Basis des Vergleichs zwischen dem ersten TTI und dem zweiten TTI ein erstes Leistungssteuerungs-Dynamikbereichsschema für den ersten physikalischen Kanal zu bestimmen, wobei das erste Leistungssteuerungs-Dynamikbereichsschema in Bezug auf die erste Referenz-Funkressource definiert wird;

auf Basis des Vergleichs zwischen dem ersten TTI und dem zweiten TTI ein zweites Leistungs-Dynamikbereichsschema für den zweiten physikalischen Kanal zu bestimmen, wobei das zweite Leistungssteuerungs-Dynamikbereichsschema in Bezug auf die zweite Referenz-Funkressource definiert wird;

das bestimmte erste Leistungssteuerungs-Dynamikbereichsschema für Übertragung auf dem ersten physikalischen Kanal an das erste drahtlose Gerät (102) anzuwenden; und

das bestimmte zweite Leistungssteuerungs-Dynamikbereichsschema für Übertragung auf dem zweiten physikalischen Kanal an das zweite drahtlose Gerät (102) anzuwenden.

6. Netzwerkknoten (104) nach Anspruch 5, wobei die Verarbeitungsschaltungen (114) weiter dazu konfiguriert sind, einen Wert des ersten TTI auf Basis von mindestens einem zu bestimmen, ausgewählt aus einer Gruppe bestehend aus:

ob das erste drahtlose Gerät (102) mindestens zwei unterschiedliche TTIs unterstützt;

einer Bitrate des ersten drahtlosen Geräts;

einer Umlaufzeit, um ein Datenpaket zwischen dem ersten drahtlosen Gerät (102) und dem Netzwerkknoten (104) zu liefern; und

einem Standort des ersten drahtlosen Geräts (102) in Bezug auf eine bedienende Zelle.

7. Netzwerkknoten (104) nach einem der Ansprüche 5-6, wobei das erste Leistungssteuerungs-Dynamikbereichsschema für jedes TTI auf Basis von mindestens einem bestimmt wird, ausgewählt aus einer Gruppe bestehend aus:

mindestens einer vordefinierten Anforderung;

einer Angabe, die von einem anderen Netzwerkknoten (104) empfangen wird;

historischen Daten;

Empfangsleistung von jeweiligen Signalen am ersten drahtlosen Gerät (102) und am zweiten drahtlosen Gerät (102); und

Kapazitätsbeschränkungen des Netzwerkknotens (104) in Bezug auf das erste Leistungssteuerungs-Dynamikbereichsschema.

8. Netzwerkknoten (104) nach einem der Ansprüche 5-7, wobei das erste Leistungssteuerungs-Dynamikbereichsschema auf Basis eines Signaltyps bestimmt wird.

9. Netzwerkknoten (104) nach Anspruch 8, wobei es sich bei dem Signaltyp um eines handelt, ausgewählt aus der Gruppe bestehend aus einem physikalischen Signal und einem physikalischen Kanal.

10. Netzwerkknoten (104) nach Anspruch 9, wobei es sich bei dem physikalischen Signal um ein Referenzsignal handelt, ausgewählt aus der Gruppe aus: einem primären Synchronisationssignal (PSS), sekundären Synchronisationssignal (SSS), zellenspezifischen Referenzsignal (CRS), und Positionsreferenzsignal (PRS).

12. Drahtloses Gerät (102), umfassend:
Verarbeitungsschaltungen (124), die dazu konfiguriert sind:

zu bestimmen, dass das drahtlose Gerät (102) mit einem ersten Übertragungszeitintervall, TTI, für Betrieb eines ersten physikalischen Kanals zwischen einem Netzwerkknoten (104) und dem drahtlosen Gerät (102) konfiguriert ist, wobei der physikalische Kanal eine erste Referenz-Funkressource einschließt;

das erste TTI mit einer ersten Schwelle zu vergleichen;

auf Basis des Vergleichs zwischen dem ersten TTI und der ersten Schwelle ein Leistungssteuerungs-Dynamikbereichsschema zu bestimmen, wobei der Leistungssteuerungs-Dynamikbereich in Bezug auf die erste Referenz-Funkressource definiert wird; und

auf Basis des bestimmten Leistungssteuerungs-Dynamikbereichsschemas eine Empfängerkonfiguration des drahtlosen Geräts (102) anzupassen, um Übertragung vom Netzwerkknoten (104) auf dem ersten physikalischen Kanal zu empfangen.

**13.** Drahtloses Gerät (102) nach Anspruch 12, wobei das Bestimmen des ersten TTI auf einer Konfigurationsnachricht basiert, die vom Netzwerkknoten (104) empfangen wird.

**14.** Verfahren für ein drahtloses Gerät, wobei das Verfahren umfasst:

Bestimmen, dass das drahtlose Gerät mit einem ersten Übertragungszeitintervall, TTI, für Betrieb eines ersten physikalischen Kanals zwischen einem Netzwerkknoten und dem drahtlosen Gerät konfiguriert ist (Schritt 30), wobei der physikalische Kanal eine erste Referenz-Funkressource einschließt;
Vergleichen des ersten TTI mit einer ersten Schwelle (Schritt 32);
Bestimmen eines Leistungssteuerungs-Dynamikbereichsschemas auf Basis des Vergleichs zwischen dem ersten TTI und der ersten Schwelle (Schritt 34), wobei der Leistungssteuerungs-Dynamikbereich in Bezug auf die erste Referenz-Funkressource definiert wird; und
Anpassen einer Empfängerkonfiguration des drahtlosen Geräts auf Basis des bestimmten Leistungssteuerungs-Dynamikbereichsschemas (Schritt 36), um Übertragung vom Netzwerkknoten auf dem ersten physikalischen Kanal zu empfangen.

**15.** Verfahren nach Anspruch 14, wobei das Bestimmen des ersten TTI auf einer Konfigurationsnachricht basiert, die vom Netzwerkknoten empfangen wird.

**Revendications**

**1.** Nœud de réseau (104), comprenant :
une circuiterie de traitement (114) incluant un processeur (116) et une mémoire (118), la circuiterie de traitement (114) étant configurée pour :

configurer un dispositif sans fil (102) avec un intervalle de temps de transmission, TTI, pour son utilisation dans le fonctionnement d'un premier canal physique entre le nœud de réseau (104) et le dispositif sans fil (102), le canal physique incluant une première ressource radio de référence ;
comparer le TTI à un seuil ;
déterminer un premier schéma de plage dynamique de commande de puissance pour le premier canal physique sur la base de la comparaison entre le TTI et le seuil, la plage dynamique de commande de puissance étant définie par rapport à la première ressource radio de référence, la détermination du premier schéma de plage dynamique de commande de puissance inclut :

si le TTI est supérieur au seuil, la sélection d'une première plage dynamique de commande de puissance pour le premier canal physique ;
si le TTI est inférieur au seuil, la sélection d'une seconde plage dynamique de commande de puissance pour le premier canal physique, la deuxième plage dynamique de commande de puissance étant différente de la première plage dynamique de commande de puissance ;
une puissance de la première ressource radio de référence dans la première plage dynamique de commande de puissance étant la même qu'une puissance de la première ressource radio de référence dans la deuxième plage dynamique de commande de puissance ; et
transmettre, sur le premier canal physique, au dispositif sans fil (102) à l'aide du premier schéma de plage dynamique de commande de puissance déterminé.

**2.** Nœud de réseau (104) selon la revendication 1, dans lequel la circuiterie de traitement (114) est en outre configurée pour :
déterminer la valeur du TTI sur la base d'au moins un élément pris dans un groupe constitué par :

le fait que le dispositif sans fil (102) prenne ou non en charge au moins deux TTI différents ;
un débit binaire de dispositif sans fil ;
un temps de propagation aller-retour pour délivrer un paquet de données entre le dispositif sans fil (102) et le nœud de réseau (104) ; et
un emplacement du dispositif sans fil (102) par rapport à un nœud de réseau (104).

**3.** Nœud de réseau (104) selon l'une quelconque des revendications 1 et 2, dans lequel le TTI est un TTI raccourci qui est inférieur à 1 ms, le TTI raccourci incluant un élément pris dans un groupe constitué par : 2 symboles de multiplexage par répartition orthogonale de la fréquence (OFDM), 4 symboles OFDM et 7 symboles OFDM.

4. Nœud de réseau (104) selon l'une quelconque des revendications 1 à 3, dans lequel la circuiterie de traitement (114) est en outre configurée pour :

configurer le dispositif sans fil (102) avec l'intervalle de temps de transmission, TTI, pour son utilisation dans le fonctionnement d'un second canal physique entre le nœud de réseau (104) et le dispositif sans fil (102), le second canal physique incluant une seconde ressource radio de référence et étant différent du premier canal physique ;

déterminer un second schéma de plage dynamique de commande de puissance pour le second canal physique sur la base de la comparaison entre le TTI et le seuil, la deuxième plage dynamique de commande de puissance étant définie par rapport à la seconde ressource radio de référence, la détermination du second schéma de plage dynamique de commande de puissance incluant :

si le TTI est supérieur au second seuil, la sélection d'une troisième plage dynamique de commande de puissance pour le premier canal physique, le premier seuil étant différent du second seuil ;

si le TTI est inférieur au second seuil, la sélection d'une quatrième plage dynamique de commande de puissance pour le premier canal physique, la troisième plage dynamique de commande de puissance étant différente de la quatrième plage dynamique de commande de puissance ;

une puissance de la seconde ressource radio de référence dans la troisième plage dynamique de commande de puissance étant la même qu'une puissance de la seconde ressource radio de référence dans la quatrième plage dynamique de commande de puissance ; et

transmettre, sur le second canal physique, au dispositif sans fil (102) à l'aide du second schéma de plage dynamique de commande de puissance déterminé.

5. Nœud de réseau (104), comprenant :
une circuiterie de traitement (114) configurée pour :

configurer un premier dispositif sans fil (102) avec un premier intervalle de temps de transmission, TTI, pour le fonctionnement d'un premier canal physique entre le nœud de réseau (104) et le premier dispositif sans fil (102), le premier canal physique incluant une première ressource radio de référence ;

configurer un second dispositif sans fil (102) avec un second TTI pour le fonctionnement d'un second canal physique entre le nœud de réseau (104) et le second dispositif sans fil (102), le second canal physique incluant une seconde ressource radio de référence ;

comparer le premier TTI et le second TTI ;

déterminer un premier schéma de plage dynamique de commande de puissance pour le premier canal physique sur la base de la comparaison entre le premier TTI et le second TTI, le premier schéma de plage dynamique de commande de puissance étant défini par rapport à la première ressource radio de référence ;

déterminer un second schéma de plage dynamique de puissance pour le second canal physique sur la base de la comparaison entre le premier TTI et le second TTI, le second schéma de plage dynamique de commande de puissance étant défini par rapport à la seconde ressource radio de référence ;

appliquer le premier schéma de plage dynamique de commande de puissance déterminé pour transmettre, sur le premier canal physique, au premier dispositif sans fil (102) ; et

appliquer le second schéma de plage dynamique de commande de puissance déterminé pour transmettre, sur le second canal physique, au second dispositif sans fil (102).

6. Nœud de réseau (104) selon la revendication 5, dans lequel la circuiterie de traitement (114) est en outre configurée pour déterminer une valeur du premier TTI sur la base d'au moins un élément pris dans un groupe constitué par :

le fait que le premier dispositif sans fil (102) prenne ou non en charge au moins deux TTI différents ;

un débit binaire de premier dispositif sans fil ;

un temps de propagation aller-retour pour délivrer un paquet de données entre le premier dispositif sans fil (102) et le nœud de réseau (104) ; et

un emplacement du premier dispositif sans fil (102) par rapport à une cellule de desserte.

7. Nœud de réseau (104) selon l'une quelconque des revendications 5 et 6, dans lequel le premier schéma de plage dynamique de commande de puissance pour chaque TTI est déterminé sur la base d'au moins un élément pris dans un groupe constitué par :

au moins une exigence prédéfinie ;

une indication reçue d'un autre nœud de réseau (104) ;

des données historiques ;

une performance de réception de signaux respectifs au niveau du premier dispositif sans fil (102) et du second dispositif sans fil (102) ; et

des limitations de capacité du nœud de réseau (104) par rapport au premier schéma de plage dynamique de commande de puissance.

**8.** Nœud de réseau (104) selon l'une quelconque des revendications 5 à 7, dans lequel le premier schéma de plage dynamique de commande de puissance est déterminé sur la base d'un type de signal.

**9.** Nœud de réseau (104) selon la revendication 8, dans lequel le type de signal est un élément quelconque pris dans le groupe constitué par un signal physique et un canal physique.

**10.** Nœud de réseau (104) selon la revendication 9, dans lequel le signal physique est un signal de référence pris dans le groupe : d'un signal de synchronisation primaire (PSS), d'un signal de synchronisation secondaire (SSS), d'un signal de référence spécifique à la cellule (CRS), et d'un signal de référence de positionnement (PRS).

**12.** Dispositif sans fil (102), comprenant :

une circuiterie de traitement (124) configurée pour :

déterminer que le dispositif sans fil (102) est configuré avec un premier intervalle de temps de transmission, TTI, pour le fonctionnement d'un premier canal physique entre un nœud de réseau (104) et le dispositif sans fil (102), le canal physique incluant une première ressource radio de référence ;

comparer le premier TTI à un premier seuil ;

déterminer un schéma de plage dynamique de commande de puissance sur la base de la comparaison entre le premier TTI et le premier seuil, la plage dynamique de commande de puissance étant définie par rapport à la première ressource radio de référence ; et

adapter une configuration de récepteur du dispositif sans fil (102) pour recevoir une transmission sur le premier canal physique, depuis le nœud de réseau (104), sur la base du schéma de plage dynamique de commande de puissance déterminé.

**13.** Dispositif sans fil (102) selon la revendication 12, dans lequel la détermination du premier TTI est basée sur un message de configuration reçu du nœud de réseau (104).

**14.** Procédé pour un dispositif sans fil, le procédé comprenant :

Le fait de déterminer que le dispositif sans fil est configuré avec un premier intervalle de temps de transmission, TTI, pour le fonctionnement d'un premier canal physique entre un nœud de réseau et le dispositif sans fil (Étape 30), le canal physique incluant une première ressource radio de référence ;

la comparaison du premier TTI à un premier seuil (Étape 32) ;

la détermination d'un schéma de plage dynamique de commande de puissance sur la base de la comparaison entre le premier TTI et le premier seuil (Étape 34), la plage dynamique de commande de puissance étant définie par rapport à la première ressource radio de référence ; et

l'adaptation d'une configuration de récepteur du dispositif sans fil pour recevoir une transmission sur le premier canal physique, depuis le nœud de réseau, sur la base du schéma de plage dynamique de commande de puissance déterminé (Étape 36).

**15.** Procédé selon la revendication 14, dans lequel la détermination du premier TTI est basée sur un message de configuration reçu du nœud de réseau.

FIG. 1
Prior Art

One subframe

Control region

Control signaling

Reference symbols

FIG. 2

Prior Art

EP 3 536 051 B1

FIG. 3

Prior Art

FIG. 4

Prior Art

FIG. 5

EP 3 536 051 B1

Network Node 104

Transceiver 111

Network Interface 113

Processing Circuitry 114

Node Processor 116

Memory 118

Power Control
Code 110

# FIG. 6

Wireless Device 102

Transceiver 122

Processing Circuitry 124

Device Processor 126

Memory 128

Device Power
Code 112

# FIG. 7

START

Configure a wireless device with a transmission time interval, TTI, used for operating a signal between the network node and the wireless device
STEP 10

Compare the TTI for transmitting the signal with a threshold
STEP 12

Determine a power control dynamic range scheme based on the comparison between the TTI and the threshold
STEP 14

Transmit the signal to the wireless device based on the determined power control dynamic range scheme
STEP 16

START

FIG. 8

START

Configure a first wireless device with a first transmission time interval, TTI, for operating a first signal between the network node and the first wireless device
STEP 20

Configure a second wireless device with a second TTI for operating a second signal between the network node and the second wireless device
STEP 22

Compare the first TTI and second TTI
STEP 24

Determine a power control dynamic range scheme for the first wireless device and the second wireless device based on the comparison of the first TTI and second TTI
STEP 26

Apply the determined power control dynamic range scheme for transmitting the first signal and the second signal
STEP 28

START

# FIG. 9

START

Determine the wireless device is configured with a first
transmission time interval, TTI, for communicating a first signal
between a network node and the wireless device
STEP 30

Compare the first TTI used by the network node for transmitting
the first signal to the wireless device with a first threshold
STEP 32

Determine a power control dynamic range scheme based on the
comparison between the first TTI and the first threshold
STEP 34

Adapt a receiver configuration of the wireless device for receiving
the first signal from the network node based on the determined
power control dynamic range scheme
STEP 36

START

FIG. 10

Network Node 104

Power Control Module 132

# FIG. 11

Wireless Device 102

Device Power Module 134

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016143008 A1